# EUROPÄISCHE PATENTSCHRIFT

(11) **EP 2 272 199 B1**
(45) Veröffentlichungstag und Bekanntmachung des Hinweises auf die Patenterteilung: **18.10.2017**
(21) Anmeldenummer: 09734228.1
(22) Anmeldetag: 23.04.2009
(51) Int. Cl.: H04L 9/08, G06F 21/00, H04L 9/32, H04L 29/06

(54) **VERTEILTE DATENSPEICHERUNGSEINRICHTUNG**
DISTRIBUTED DATA MEMORY UNIT
DISPOSITIF DE STOCKAGE DE DONNÉES RÉPARTI

(30) Priorität: 23.04.2008 AT 6432008
(43) Veröffentlichungstag der Anmeldung: 12.01.2011
(73) Patentinhaber: Kisters, Friedrich, 8280 Kreuzlingen (CH)
(72) Erfinder: KISTERS, Friedrich, 8280 Kreuzlingen 4 (CH)
(74) Vertreter: Patentanwälte Dr. Keller, Schwertfeger
(86) Internationale Anmeldenummer: PCT/EP2009/002954
(87) Internationale Veröffentlichungsnummer: WO 2009/130022

(56) Entgegenhaltungen:
- DE-A1- 19 925 910
- US-A1- 2002 161 880
- US-A1- 2006 221 985
- US-B1- 6 363 481
- US-B1- 6 785 810

## Beschreibung

Die Erfindung betrifft eine verteilte Datenspeicherungseinrichtung umfassend eine Mehrzahl von Speichereinheiten mit jeweils einem Speichermittel und einer Zugriffssteuerung, eine Authentifizierungseinrichtung mit einem Speichermittel und einer Validierungseinrichtung, eine Ablaufsteuerung mit einem Ablaufsteuerungsmodul und einer Zugriffskontrolleinrichtung, wobei die die Ablaufsteuerung mit den Speichereinheiten und der Authentifizierungseinrichtung kommunikativ verbunden ist.

Im Bereich der Datenverarbeitungseinrichtungen sind eine Mehrzahl unterschiedlicher Einrichtungen bekannt, um Daten bzw. Information abzuspeichern und später darauf zugreifen zu können. Bei so genannten Einzelplatzsystemen ist die Datenspeichereinheit zumeist zusammen mit der Zugriffssteuerungskontrolle integriert ausgebildet und erlaubt daher auch meist einen direkten Zugriff eines Benutzers bzw. einer Ablaufsteuerung auf die hinterlegten Daten. Steigen jedoch die Anforderungen an die zu verwaltende Datenmenge bzw. ist damit zu rechnen, dass eine Mehrzahl von Benutzer weitestgehend gleich- zeitig auf die hinterlegten Daten zugreifen können soll, ist eine einzelne Datenspeichereinheit zumeist nicht mehr in der Lage, den erhöhten Anforderungen gerecht zu werden und eine ausreichende Arbeitsleistung bzw. Verarbeitungsgeschwindigkeit zur Verfügung zu stellen. Daher wird zumeist eine Mehrzahl von Datenspeichereinheiten verwendet und die abzulegende bzw. zu verwaltende Information auf die einzelnen Speichereinheiten aufgeteilt. Eine zentrale Zugriffssteuerung übernimmt in diesem Fall die Koordination sowie die Kontrolle und Steuerung des Zugriffs auf die einzelnen Speichereinheiten und stellt somit sicher, dass dem Benutzer die verteilte Struktur verborgen bleibt.

Da die zu verwaltenden Informationseinheiten auf mehreren Speichereinheiten aufgeteilt sein können, sind Vorkehrungen erforderlich, um die Beziehungen zwischen den Speichereinheiten darzustellen und zu verwalten. Beispielsweise offenbart dazu die WO 95/22111 ein verteiltes Datenbanksystem, das eine Mehrzahl miteinander verbundener Recheneinheiten aufweist, welche die einzelnen Datenbanken des Datenbanksystems verwalten. Jede Datenbank umfasst dabei Datensätze in denen eine Beziehung der globalen Struktur der Recheneinheiten hinterlegt ist. Zusätzlich ist in einer lokalen Zuordnungsvorschrift hinterlegt, wo die einzelnen Dateneinheiten in der eigenen Recheneinheit hinterlegt sind.

Mittels globalen Informationseinheiten wird somit die Grobstruktur der Datenspeichereinheiten festgelegt, ferner wird über die lokalen Informationseinheiten die Struktur je Speichereinheit festgelegt.

Von wesentlicher Bedeutung in einer verteilten Datenspeicherungseinrichtung ist die Frage der Sicherung der hinterlegten Information gegen unbefugten Zugriff, insbesondere da diese auf verteilten Systemen abgelegt ist, wobei ggf. auch eine örtliche Trennung möglich ist. Es ist daher sicherzustellen, dass ein Zugriff auf die hinterlegte Information nur nach einer entsprechenden Autorisierung möglich ist.

Dazu offenbart bspw. die US 6,098,056 A ein System und eine Methode zur Steuerung und Kontrolle der Zugriffsrechte in einem verteilten Informationssystem unter Verwendung eines asymmetrischen Kryptosystems. Das Netzwerk umfasst zumindest einen Server, der mit einer Speichereinheit gekoppelt ist und zur Ablegung von zugriffsbeschränkten Dokumenten ausgebildet ist. Dazu wird ein zufälliger Dokumentschlüssel generiert, der mit dem öffentlichen Schlüssel des Servers verschlüsselt wird und als Metainformation in einem Datencontainer abgelegt wird. Nach Authentifizierung einer Zugriffssteuerungseinrichtung wird der Dokumentschlüssel mit dem öffentlichen Schlüssel der Zugriffssteuerungseinrichtung verschlüsselt, wodurch sichergestellt ist, dass nur die Zugriffssteuerungseinrichtung den Dokumentschlüssel aufheben und auf den Inhalt zugreifen kann. Der entschlüsselte Inhalt des Dokuments wird anschließend dem Benutzer am Client zur Anzeige gebracht.

Auch die US 2007/0289026 A1 offenbart ein System zur Sicherung von Information bzw. zum Infom 1 ationsaustausch in einem verteilten System. Das System umfasst eine Datenspeichereinrichtung und eine sichere Informationsverwaltungseinrichtung. Die Informationseinheiten können verschlüsselt und digital signiert werden, bevor sie an einen authentifizierten Client übertragen werden.

Die WO 2008/021075 A2 offenbart eine Methode zur Sicherung des Nachrichtenverkehrs in einem Datennetzwerk. Verteilt abgelegte Sicherheitspolizzen kennzeichnen jeweils eine Sicherheitsgruppe, wobei jede derartige Sicherheitsgruppe zumindest einen lokalen und einen entfernten Datenknoten umfasst. Soll eine neue Sicherheitsgruppe in den Verband aufgenommen werden, wird von einer lokalen Zertifizierungsstelle eine Folge von Anfragen abgesetzt, um die lokalen Knoten in der neuen Sicherheitsgruppe zu Identifizieren und Authentifizieren. Danach kann die Sicherheitszertifizierungsstelle durch Austausch von Sicherheitsinformation den Datenverkehr zwischen lokalen und entfernten Knoten sichern.

Die US 2002/161880 A1 beschreibt eine Authentifizierungseinrichtung, welche einen Schlüssel für ein Zugriffsteuerungsmodul einer ersten Speichereinheit erzeugt. Das darin beschriebene

Speichersystem besitzt ein RMI-Interface zur Verwaltung eines Speichers. Das Speichersystem umfasst dabei ein Speichermittel mit einer hohen Datenkapazität und einen Verwaltungsmechanismus, der das Speichermittel, basierend auf den Instruktionen von einem entfernten Manager verwaltet. Zur Sicherstellung einer entsprechenden Zugriffberechtigung wird eine Zertifizierung durchgeführt, welche Daten aus einer Managerinformationsdatei berücksichtigt, wobei in dieser Datei Kennung und Passwörter zugelassener Manager hinterlegt sind. Diese Managerinformationsdatei wird von dem RMI-Managementobjekt zur Authentifizierung jedes registrierten Managers verwendet und kann zusätzlich Informationen über die letzten Anmeldevorgänge enthalten. Wird ein illegaler Zugriff erkannt, kann durch Setzen eines Merkers die Zugriffsberechtigung für ein Managerprogramm aufgehoben werden, ohne das gesamte System anhalten zu müssen.

In der DE 199 25 910 A1 wird ein Verfahren zum Be- und Verarbeiten von Daten beschrieben, die in wenigstens einer Datenbank in zumindest teilweise verschlüsselter Form gespeichert werden, wobei eine Entschlüsselung ausschließlich beim Anwender unter Verwendung eines in einer zentralen Datenbank gespeicherten, ausschließlich an den autorisierten Anwender übermittelbaren, Schlüssels ent- oder verschlüsselt werden. Die abgespeicherten Daten werden dabei derart aufgeteilt, dass identifizierende Datenteile in einer ersten Datenbank und beschreibenden Daten in einer zweiten Datenbank gespeichert werden, wobei jeweils ein Zuordnungsdatum mitgespeichert wird, wodurch anhand dieser identisch ausgeprägten Zuordnungsdaten die in der jeweils anderen Datenbank gespeicherten Datenteilen auffindbar sind. Das Zuordnungsdatum und gegebenenfalls auch die beschreibenden Datenteilen werden verschlüsselt. Ein Zugriff auf die verschlüsselten Daten ist jedoch nur dann möglich, wenn vom Anwender das Zugangsdatum entschlüsselt wird, wobei diese Entschlüsselung stationär beim autorisierten Anwender erfolgt.

Die US 6,785,810 B1 beschreibt eine Möglichkeit zur sicheren Übertragung, Suche und Abspeicherung von Daten, wobei sicherheitskritische Daten doppelt und weniger sicherheitskritische Daten nur einfach verschlüsselt werden. Zur Verringerung der erforderlichen, sicherheitsrelevanten Schlüssel wird ein zweifaches Sicherheitssystem verwendet. Der Server ist dazu ausgebildet eine sogenannte unscharfe Suche durchzuführen, bei der für jeden gespeicherten Datensatz ein sogenanntes Trigram generiert wird, ferner werden für jeden Datensatz Signaturvektoren generiert, welche verschlüsselt in einer Datenbank angelegt werden. Mit dieser unscharfen Suche ist es möglich, auf Benutzerinformationen zugreifen zu können.

Die aus dem Stand der Technik bekannten Vorrichtungen bzw. Verfahren sind dazu ausgebildet, den Zugriff auf Daten in einem verteilten Netzwerk zu sichern, sowie den Datenaustausch zwischen verteilten Knoten in einem Netzwerk bspw. in Form von authentifizierten Sicherheitsgruppen abzugrenzen. Bei den bekannten Vorrichtungen bzw. Verfahren liegt das Hauptaugenmerk auf der Sicherung des Datenverkehrs zwischen den einzelnen Netzwerkknoten bzw. bei der Sicherung des Zugriffs auf Netzwerkknoten. Für eine hochsichere Datenspeichereinrichtung, insbesondere wenn Sie den Anforderungen des Finanzwesens genügen soll, ist nicht nur eine Sicherung des Datenverkehrs erforderlich, sondern es ist insbesondere auch ein erhöhter Schutz der Daten an sich notwendig. Insbesondere bei verteilten Datenspeichereinheiten, die ggf. aus Gründen der Redundanz bzw. der Lastverteilung auch auf mehrere Standorte aufgeteilt sein können, kommt dem Schutz jeder einzelnen Speichereinheit eine ganz besondere Bedeutung zu. Insbesondere ist es von ganz besonderer Bedeutung, dass selbst bei Kenntnis des Inhalts einer Datenspeichereinheit, nicht auf den Inhalt anderer Datenspeichereinheiten zugegriffen bzw. rückgeschlossen werden kann.

Die Aufgabe der Erfindung liegt darin eine Datenspeicherungseinrichtung zu finden, die Dateneinheiten auf einer Mehrzahl verteilter Speichereinheiten ablegt, wobei die Zuordnung der Datensätze zu den Speichereinheiten und die Steuerung des Zugriffs auf die Speichereinheiten getrennt voneinander abgelegt sind und somit ein Zugriff auf Dateneinheiten nur nach eindeutiger Authentifikation der zugreifenden Module möglich ist. Auch ist es Aufgabe der Erfindung die Datenspeicherungseinrichtung derart auszubilden, dass der Zugriff auf die Speichereinheiten nur einer eindeutig identifizierten Gruppe von Zugriffsmodulen möglich ist. Auch ist es Aufgabe der Erfindung die Datenspeicherungseinrichtung derart auszubilden, dass der Zugriff auf die Speichereinheiten nur einer eindeutig identifizierten Gruppe von Zugriffsmodulen möglich ist. Insbesondere ist es Aufgabe der Erfindung die Datenspeicherungseinrichtung derart auszubilden, dass eine permanente, inhärente Prüfung der Zugriffsberechtigungen möglich ist, sodass ein punktueller Manipulationsversuch erkennbar und insbesondere verhinderbar ist. Ferner ist es Aufgabe der Erfindung, die Verwaltung der Zugriffe auf Daten besonders gesichert ausführen zu können.

Die Aufgabe der Erfindung wird unter anderem dadurch gelöst, dass im Speichermittel der Authentifizierungseinrichtung zumindest ein eindeutiger elektronischer Schlüssel hinterlegt ist. Diese Ausbildung ermöglicht es der Authentifizierungseinrichtung, die Aufgabe einer zentralen Verwaltung aller möglichen zulässigen elektronischen Schlüssel zu übernehmen. Im Hinblick auf eine hohe Datensicherheit hat dieses Merkmal den ganz besonderen Vorteil, dass die Authentifizierungseinrichtung und insbesondere das Speichermittel der Authentifizierungseinrichtung, in einer Hochsicherheitsumgebung angeordnet sein können und somit ein außerordentlich hoher Schutz des hinterlegten elektronischen Schlüssels gegeben ist. Des Weiteren kann die Authentifizierungseinrichtung derart ausgebildet sein, dass eine nachträgliche Änderung bzw.

Aktualisierung hinterlegter elektronischer Schlüssel nicht mehr möglich ist, was einen weiteren bedeutenden Sicherheitsgewinn darstellt. Jedenfalls ist die Authentifizierungseinrichtung derart ausgebildet, dass ein Zugriff auf das Speichermittel nur über einen genau definierten Kommunikationsweg möglich ist, der insbesondere von der Authentifizierungseinrichtung überwacht bzw. gesteuert wird.

Als weiteres Merkmal zur Lösung der Aufgabe der Erfindung weist die Zugriffskontrolleinrichtung ein Zugriffssteuerungsmodul und eine Speichermittel auf, sodass auch hier sichergestellt ist, dass auch für das Ablaufsteuerungsmodul der Ablaufsteuerung ein direkter Zugriff auf das Speichermittel nicht möglich ist und somit jeder Zugriff über das Zugriffssteuerungsmodul erfolgt bzw. von diesem verwaltet wird. Als Zugriffssteuerungsmodul wird hier jene technische Einrichtung verstanden, die eine über eine Kommunikationsverbindung eingehende Anfrage aufnimmt, entsprechend aufbereitet und die technischen Schritte durchführt, die zur Extraktion der relevanten Informationseinheiten aus dem Speichermittel erforderlich sind. Die Informationseinheiten werden dann entsprechend aufbereitet und an das anfragende Modul zurück übermittelt.

Die Aufgabe der Erfindung wird auch durch ein Merkmal gelöst, wonach in der Speichereinheit ein eindeutiger erster Schlüssel hinterlegt ist, der mit einem hinterlegten Schlüssel der Authentifizierungseinrichtung korrespondiert. Dadurch ist sichergestellt, dass die Speichereinheit und die Authentifizierungseinrichtung ein gemeinsames charakteristisches und vor allem eindeutiges Merkmal aufweisen, über das eine eindeutige Beziehung zwischen der Speichereinheit und der Authentifizierungseinrichtung hergestellt ist. Da die Authentifizierungseinrichtung elektronische Schlüssel hinterlegt hat, kann nur jene Speichereinheit eine Beziehung zur Authentifizierungseinrichtung herstellen, deren Schlüssel mit einem hinterlegten Schlüssel korrespondiert.
Als Schlüssel gelten hier und im Folgenden alle bekannten Ausbildungen von elektronischen Schlüsseln die es ermöglichen, zwei voneinander getrennte Systeme durch ein gemeinsames Merkmal einander eindeutig zuordnen zu können. Beispielsweise kann ein Schlüssel in beiden Modulen abgelegt sein, womit das Grunderfordernis einer eindeutigen Zuordnung abgedeckt ist. Es ist aber auch ein asymmetrisches Schlüsselsystem möglich was den Vorteil hat, dass es gleichzeitig auch für Verschlüsselungsaufgaben genutzt werden kann.

Bei einer verteilen Datenspeichereinrichtung ist es erforderlich, die Beziehungen zwischen den einzelnen Dateneinheiten zu verwalten, um anschließend auf die verteilten Dateneinheiten zugreifen zu können. Bei bekannten Datenspeicherungseinrichtungen werden zusammen mit den Nutzdateneinheiten, immer auch die Zuordnungen in den Speichereinheiten hinterlegt was den Nachteil hat, dass bei einem missbräuchlichen Zugriff auf eine Speichereinheit immer auch Information zugänglich ist, mit der auf andere Speichereinheiten zugegriffen werden kann. Von besonderer Bedeutung ist daher das Merkmal, dass im Speichermittel der Zugriffskontrolleinrichtung eine Zuordnungstabelle hinterlegt ist, da somit eine Trennung von Dateneinheiten und Beziehungen zwischen den Dateneinheiten erreicht wird. Im Sinne der Sicherung der hinterlegten Daten ist es von ganz entscheidender Bedeutung, dass selbst bei Kenntnis des Inhalts der Dateneinheiten einer Speichereinheit, nicht auf Dateneinheiten anderer Speichereinheiten zugegriffen werden kann und insbesondere auch kein Rückschluss auf den Inhalt anderer Dateneinheiten möglich ist. Dieses erfindungsgemäße Merkmal stellt nun in ganz besonders vorteilhafter Weise sicher , dass die Speichereinheiten der erfindungsgemäßen verteilten Datenspeicherungseinrichtung als einzelne funktionale Einheiten ausgebildet sein können und ggf. auch an unterschiedlichen Standorten angeordnet sein können.

Ein ganz wesentlicher Vorteil der erfindungsgemäßen Datenspeicherungseinrichtung liegt auch darin, dass sich die Kommunikation zwischen den einzelnen Komponenten gezielt steuern bzw. festlegen lässt. Da die Ablaufsteuerung mit den Speichereinheiten und der Authentifizierungseinrichtung kommunikativ verbunden ist, also keine direkte Kommunikationsverbindung zwischen den einzelnen Speichereinheiten besteht, ist ein direkter Zugriff einer Speichereinheit auf eine andere Speichereinheit weitestgehend verhindert. Insbesondere ist somit auch eine gezielte Steuerung des Zugriffs möglich, da im Wesentlichen die Kommunikation über die Ablaufsteuerung stattfindet und diese jeden Zugriff ggf. zusätzlich durch die Authentifizierungseinrichtung authentifizieren lassen kann. Die Zugriffsregeln können also in der Ablaufsteuerung hinterlegt sein, es ist aber auch möglich, dass die Authentifizierungseinrichtung die Steuerung bzw. Kontrolle der Zugriffe übernimmt.

Beispielsweise kann eine zusätzliche Überwachungseinrichtung vorhanden sein, die jeden Zugriff überwacht und bei Auftreten eine Abweichung von einem zulässigen Zugriffsversuch bspw. eine sofortige Beendigung des laufenden Zugriffs auslöst. Eine derartige Überwachungseinrichtung kann auch die Integrität der einzelnen Module überwachen, um so einen Manipulationsversuch zu erkennen.

In die gleiche Richtung zielt die Weiterbildung , bei der die Zugriffskontrolleinrichtung eine weitere Speichereinheit aufweist, in deren Speichermittel Ausführungsanweisungen hinterlegt sind. Durch diese Weiterbildung wird eine weitestgehende Trennung von Dateneinheiten, Beziehungsstruktur, sowie Zugriffs- und Ausführungssteuerung erreicht. Insbesondere lässt sich somit jede einzelne Komponente der erfindungsgemäßen Datenspeicherungseinrichtung getrennt ausbilden, wodurch ein maximaler Schutz gegen unbefugten Zugriff auf Dateneinheiten erreicht wird. Ein potenzieller Angreifer müsste somit die Kontrolle über eine Mehrzahl einzeln abgesicherter Komponenten erlangen, um für ihn interessante bzw. missbräuchlich verwendbare Dateneinheiten zu erlangen.

Für den Aufbau und Betrieb der erfindungsgemäßen verteilten Datenspeicherungseinrichtung ist eine Weiterbildung von Vorteil, bei der die Speichereinheiten und die Ablaufsteuerung über eine erste Kommunikationsverbindung kommunikativ miteinander verbunden sind. Diese erste Kommunikationsverbindung kann durch ein beliebiges datentechnisches Kommunikationsnetzwerk gebildet sein, bspw. durch das Intranet oder das Internet. Insbesondere kann die Kommunikationsverbindung durch eine Punkt-zu-Punkt Verbindung gebildet sein, was den besonderen Vorteil hat, dass die am Kommunikationsweg vorhandenen Vcrmittlungs- bzw. Weiterleitungsknoten keine Möglichkeit haben, auf die transportierte Information bzw. Daten in missbräuchlicher Weise zugreifen zu können. Insbesondere hat diese Ausbildung jedoch auch den Vorteil, dass der Betriebszustand der Speichereinheiten überprüfbar ist, was für die Zuverlässigkeit der Datenspeicherungseinrichtung von besonderer Bedeutung ist. Eine Punkt-zu-Punkt Verbindung könnte bspw. durch einen fest geschalteten Kommunikationsweg oder eine so genannte VPN-Verbindung gebildet sein.

Im Hinblick auf die Sicherung der Kommunikation zwischen den Speichereinheiten und der Ablaufsteuerung ist eine Weiterbildung von Vorteil, bei der die Speichereinheit und die Ablaufsteuerung ein Verschlüsselungsmodul aufweisen. Dieses Verschlüsselungsmodul ist dazu ausgebildet, die Kommunikation zwischen der Speichereinheit und der Ablaufsteuerung derart zur sichern, dass zur kommunikativen Kopplung der Speichereinheit und der Ablaufsteuerung eine prinzipiell unsichere Kommunikationsverbindung verwendet werden kann. Das Verschlüsselungsmodul kann bspw. auf der Basis eines Public-Key-Systems funktionieren, wodurch die Kommunikation zwischen den Schlüsselpartnern einfach möglich ist, jedoch eine missbräuchliche Aushorchung der übertragenen Information weitest- gehend verhindert wird. Selbstverständlich sind weitere bekannte Verschlüsselungsverfahren vom anspruchsgemäßen Verschlüsselungsmodul einsetzbar. Insbesondere kann die Verschlüsselung derart gebildet sein, dass jede Kommunikationsverbindung mit einem individuellen Verschlüsselungssystem gesichert ist. Bekannte Verschlüsselungsverfahren basieren zumeist auf einem pseudozufälligen Code, der ggf. von einem Angreifer ausspioniert werden kann, wodurch dieser Zugriff auf die übertragene Information bekommen kann. Eine Weiterbildung könnte nun bspw. darin bestehen, dass ein mehrstufiges Verschlüsselungsverfahren eingesetzt wird. Dabei wird in einem ersten Schritt eine durch pseudozufällige Codes gesicherte Verbindung aufgebaut. Über diese werden bspw. durch asymmetrische Codes gesichert, Schlüssel ausgetauscht, mit denen dann im Weiteren eine End-zu-End-Verschlüsselung aufgebaut wird. Ein potentieller Angreifer müsste somit neben der ersten Kanalverschlüsselung, auch noch den Synchronisationsmechanismus beim Austausch der Schlüssel manipulieren, um eine Chance auf einen missbräuchlichen Zugriff zu bekommen. Durch diese Mehrfachsicherung wird ein Angriff extrem aufwändig bzw. ist mit derzeit bekannten Entschlüsselungsverfahren in einer Relevanzzeit der Information nicht machbar.

Erfindungsgemäß wird durch die in den Speichereinheiten hinterlegten eindeutigen Schlüssel und einer in der Zugriffskontrolleinrichtung hinterlegten Zuordnungstabelle; eine Beziehung zwischen den einzelnen Speichereinheiten hergestellt. Durch eine anspruchsgemäße Weiterbildung , bei der in der Speichereinheit ein zweiter eindeutiger elektronischer Schlüssel hinterlegt ist, der mit einem hinterlegten Schlüssel der Authentifizierungseinrichtung korrespondiert, ist nun in vorteilhafter Weise sichergestellt, dass zusätzlich zur Beziehung der Speichereinheiten untereinander, eine Beziehung zwischen den Speichereinheiten und der Authentifizierungseinrichtung hergestellt ist. Insbesondere ist somit auch eine so genannte Rückwärtsprüfung möglich, also dass die Zugriffssteuerung bspw. die Authentizität der Ablaufsteuerung prüfen kann.

Den erfindungsgemäß verwendeten elektronischen Schlüsseln kommt eine ganz besondere Bedeutung zu, da sie eine eindeutige Zuordnung ermöglichen müssen und somit jeder Schlüssel bzw. jede Schlüsselkombination exakt eindeutig sein muss und dass ein Unbefugter die Schlüssel nicht erraten kann. Daher ist es von ganz besonderem Vorteil, wenn die Authentifizierungseinrichtung ein Modul zur Generierung elektronischer Schlüssel aufweist. Da erfindungsgemäß im Speichermittel der Authentifizierungseinrichtung zumindest ein eindeutiger elektronischer Schlüssel hinterlegt ist, hat die anspruchsgemäße Weiterbildung den besonderen Vorteil, dass die Generierung der elektronischen Schlüssel und die anschließende Hinterlegung vollständig auf der Authentifizierungseinrichtung er- folgen kann, ohne dass dazu eine externe Einrichtung erforderlich wäre, was bspw. wieder eine sicherheitstechnische Schwachstelle bedeuten würde. Somit ist die Generierung und Verwaltung eindeutiger elektronischer Schlüssel durch eine zentrale Einrichtung möglich.

Bei der erfindungsgemäßen verteilten Datenspeicherungseinrichtung wird eine Mehrzahl von Schlüssel verwendet, um eindeutige Beziehungen zwischen den einzelnen Modulen der Datenspeicherungseinrichtung herzustellen. Die Schlüssel sind dabei bevorzugt derart ausgebildet, dass es zu einem Modulschlüssel bspw. einem Schlüssel einer Speichereinheit, immer einen korrespondierenden Schlüssel im Schlüsselspeicher gibt. Diese Korrespondenz bedeutet insbesondere, dass die Beziehung durch den Schlüssel selbst hergestellt ist. Bei einer Ausbildung kann jeweils ein Modulschlüssel mit einem Referenzschlüssel übereinstimmen. Es ist jedoch auch möglich von einem so gennanten Referenzschlüssel im Schlüsselspeicher, eine Mehrzahl von Modulschlüssel abzuleiten, die bei einer Prüfung einen Bezug zum Referenzschlüssel herstellen lassen. Bevorzugt ist eine Ausbildung, bei der ein Modulschlüssel eindeutig einem Referenzschlüssel zugeordnet werden kann, jedoch nicht auf den Referenzschlüssel geschlossen werden kann. Somit ist ein Angreifer nicht in der Lage, einen gefälschten Modulschlüssel zu generieren, um damit missbräuchlichen Zugriff zu erlangen.

Im Schlüsselspeicher kann nun eine Mehrzahl von Referenzschlüssel hinterlegt sein, von denen bei Bedarf Modulschlüssel generiert werden. Dies hat den Vorteil, dass der Schlüsselspeicher ganz besonders gesichert sein kann, bspw. dass ein verändernder Zugriff auf den Speicher verhindert wird.

Von Vorteil ist auch eine Weiterbildung, bei der das Speichermittel der Speichereinheit durch ein Datenbanksystem gebildet ist, da derartige Datenbanksysteme auf sehr gute Wei- se dazu ausgebildet sind, eine große Anzahl von Dateneinheiten aufnehmen und verwalten zu können. Derartige Speichermittel haben den weiteren Vorteil, dass sie bestimmungsgemäß dazu ausgebildet sind, eine sehr große Aufbewahrungssicherheit der abgelegten Daten und insbesondere auch eine sehr hohe Bereitstellungssicherheit zu bieten. Das Speichermittel zur Hinterlegung von Dateneinheiten wird bevorzugt für eine möglichst hohe Anzahl gleichzeitiger Zugriffe auf eine große Menge an Informationseinheiten ausgebildet sein. Das Speichermittel zur Hinterlegung der Zuordnungstabelle bzw. der Ausführungsanweisungen soll bevorzugt eine möglichst hohe Antwörtgeschwindigkeit bieten, da davon im Wesentlichen alle weiteren Zugriffe auf die anderen Speichereinheiten abhängen. Daher können die Speichermittel dieser Speichereinheiten auch durch ein Datenverarbeitungssystem gebildet sein, welches zumeist eine besonders hohe Verarbeitungsgeschwindigkeit bietet.

Eine Weiterbildung kann auch darin bestehen, dass das physikalische Speichermedium durch ein Ferromagnetisches Speichermedium, insbesondere eine so genannte Festplatte, gebildet sein kann, wobei diese mit einer Datenverschlüsselung ausgebildet ist. Bei einer derartigen Verschlüsselung sind die Daten auf dem Speichermedium verschlüsselt hinter- legt, wobei das Ver- und Entschlüsselungssystem resident in der Zugriffssteuerung hinterlegt ist. Ein Angreifer müsste somit die gesamte Speichereinheit entwenden, da aus dem verschlüsselten Speichermedium alleine keine nützliche Information entnommen werden kann. Selbst wenn ein Angreifer die Verschlüsselung des Speichermediums überwindet, ist der erzielte Informationsgewinn äußerst gering, da durch die verteilte Ablegung der Informationseinheiten ein Zugriff auf weitere Informationseinheiten weitestgehend verhindert ist. Insbesondere fehlt dem Angreifer die Information über die Zusammenhänge zwischen den Speichereinheiten. Diese Datenverschlüsselung könnte bspw. noch dahingehend erweitert werden, das die hinterlegten Daten nur im laufenden Betrieb gültig zugreifbar sind, also dass ein Angreifer das Speichermedium unter Aufrechterhaltung des laufenden Betriebs entwenden müsste.

Insbesondere sind als Speichermittel alle Einrichtungen zu verstehen, die dem Fachmann zur Hinterlegung von Informationseinheiten bekannt sind. Beispielhaft seien hier auch Halbleiterspeicher sowie tabellarische Datendateien aufgeführt.

Gemäß anspruchsgemäßen Weiterbildungen ist in der Speichereinheit der Zuordnungstabelle bzw. in der Speichereinheit der Ausführungsanweisungen ein erster und /oder zweiter eindeutiger Schlüssel hinterlegt, der mit einem, in der Authentifizierungseinrichtung hinterlegten Schlüssel korrespondiert. Die Vorteile dieser Weiterbildung wurden bereits zuvor beschrieben, insbesondere ist damit eine Prüfung der Authentizität sowohl der Speichereinheiten, also auch der Ablaufsteuerung möglich.

Eine besonders vorteilhafte Weiterbildung erhält man, wenn die Zugriffskontrolleinrichtung derart ausgebildet ist, dass das Zugriffssteuerungsmodul und die Speichereinheiten über eine zweite Kommunikationsverbindung miteinander kommunikativ verbunden sind. Die Ablaufsteuerung sowie die Speichereinheiten der Zugriffskontrolleinrichtung stellen wesentliche Komponenten der sicherheitstechnischen Absicherung und des Zugriffsschutz auf die Speichereinheiten der Dateneinheiten dar. Daher werden diese Einheiten bevorzugt in abgeschlossenen Einrichtungen angeordnet sein , wobei auf eine Sicherung gegen unbefugten Zutritt großer Wert gelegt wird. Die kommunikative Verbindung der Speichereinheiten mit dem Zugriffssteuerungsmodul der Zugriffskontrolleinrichtung erfolgt über die zweite Kommunikationsverbindung, die bevorzugt durch eine Punkt-zu-Punkt Verbindung gebildet ist, die ausbildungsgemäß besonders gegen einen missbräuchlichen Zugriff geschützt ist. Als Kommunikationsmedium zur Ausbildung der zweiten Kommunikationsverbindung kann wiederum jedes datentechnische Kommunikationsnetzwerk verwendet werden, wobei dieses jedoch den besonderen Anforderungen hinsichtlich der Sicherung der zweiten Kommunikationsverbindung gerecht werden muss.

Diese Weiterbildung ermöglicht die Ausbildung einer weiteren Zugriffssicherung, da sich somit auch die Kommunikationswege der Abfrageanweisungen bzw. Transaktionen festlegen lassen. Somit kann ein missbräuchlicher Angriffsversuch sofort auch dadurch erkannt werden, dass bspw. eine Anfrage über einen unzulässigen Kommunikationsweg bei einer Komponente eintrifft.

Bei bekannten Datenspeicherungseinrichtungen wird nach erfolgter Authentifizierung bzw. Prüfung der Zugriffsberechtigung, von der Ablaufsteuerung zumeist direkt auf die Speichereinheiten und insbesondere auf die hinterlegten Dateneinheiten zugegriffen. Im Hinblick auf einen hohen Schutz der Daten gegen missbräuchliche Verwendung hat diese Zugriffsart den Nachteil, dass es einem potenziellen Angreifer gelingen könnte, bei Umgehung der Authentifizierungsvorkehrungen, direkt auf die hinterlegten Dateneinheiten zugreifen zu können. Mit einer anspruchsgemäßen Weiterbildung , bei der im Ablaufsteuerungsmodul eine Mehrzahl hierarchisch strukturierter Abläufe hinterlegt sind wird nun ein derartiger Direktzugriff verhindert, da der Zugriff auf die Speichereinheiten nur mittels der hinterlegten Abläufe möglich ist und insbesondere ein Direktzugriff auf die Speichereinheiten unterbunden wird.

Auch eine Weiterbildung, bei der in der Zuordnungstabelle eine Verknüpfung eines hierarchischen Ablaufs mit einer Speichereinheit hinterlegt ist, dient dem Schutz der hinterlegten Daten, da somit eine weitere Sicherungsebene ausgebildet wird. Mit der anspruchsgemäßen Weiterbildung ist es somit möglich, den Speicher- und Ausführungsort der hierarchischen Abläufe vollständig zu trennen und somit für einen potenziellen Angreifer eine weitere Sicherheitshürde bilden.

Von ganz besonderer Bedeutung sind anspruchsgemäße Weiterbildungen, nach denen die Authentifizierungseinrichtung, die Ablaufsteuerung und die Speichereinheit eine erste Sicherheitszone ausbilden bzw. die Ablaufsteuerung, die Zuordnungstabelle und die Ausführungsanweisungen eine zweite Sicherheitszone ausbilden. Diese Sicherheitszonen sind ein ganz wesentliches Konzept der erfindungsgemäßen verteilten Datenspeicherungseinrichtung, als dadurch verhindert wird, dass ein potentieller Angreifer durch Manipulation einer einzelnen Komponente, Zugriff auf das Gesamtsystem bekommen kann. Jede dieser Sicherheitszonen kannbspw. permanent von einer Überwachungs- und Prüfeinrichtung kontrolliert werden, um somit einen nicht zulässigen Vorgang sofort erkennen zu können. Ins- besondere müsste ein potentieller Angreifer immer zumindest zwei Komponenten einer Sicherheitszone gleichzeitig und insbesondere zeitlich synchron manipulieren, um einen missbräuchlichen Zugriffsversuch verschleiern zu können. Da es bei der erfindungsgemäßen Datenspeicherungseinrichtung auch ganz wesentlich auf die Zugriffsabfolge ankommt, müsste ein potentieller Angreifer über äußerst genaue Details der internen Zusammenhänge verfügen, um mit einem gezielten und synchronisierten Angriff auf mehrere Komponenten, Chancen auf Erfolg zu haben.

Durch die Kontrolle bzw. Steuerung der Zugriffe lässt sich mit der anspruchsgemäßen Weiterbildung bspw. sicher auch stellen, dass ein direkter Zugriff eines Moduls der ersten Schutzzone auf ein Modul der zweiten Schutzzone bzw. eines weiteren Moduls weitestgehend unterbunden wird. Da nur über genau festgelegte Kommunikationswege und unter Einhaltung festgelegter Abläufe Zugriffe möglich sind, lässt sich jeder davon abweichende Zugriffsversuch sofort als potentieller Angriff erkennen und mittels entsprechender Gegenmaßnahmen unterbinden. Insbesondere kann auch die Festlegung des korrekten Kommunikationswegs zyklisch geändert werden. Beispielsweise kann ein Algorithmus in Abhängigkeit von den bisher stattgefundenen Zugriffen und/oder basierend auf zeitlichen Abhängigkeiten, den jeweils gültigen Kommunikationsweg festlegen, was für einen Angreifer eine weitere Hürde darstellt, da eine auf einem ungültigen Kommunikationsweg eintreffende Anfrage als Manipulationsversuch erkannt werden würde.

In einer Weiterbildung könnten weitere Schutzzonen eingeführt werden, um so einzelne technische Einheiten wie bspw. die Speichereinheiten in einer eigenen Schutzzone zusammenzufassen. Für einen Angreifer ließe sich dadurch die zu überbrückende Hürde erneut erhöhen, da eine Mehrzahl unterschiedlicher Sicherungssysteme zu überbrücken sind, die jedoch alle durch gegenseitige Abhängigkeiten miteinander verflochten sind und somit einen Einzelangriff verhindern bzw. sehr leicht erkennbar machen.

Die Aufgabe der Erfindung wird auch durch ein Verfahren zum Betrieb einer verteilten Datenspeicherungseinrichtung gelöst. In einem ersten Verfahrensschritt wird ein eindeutiger elektronischer Schlüssel generiert, wobei dieser Schlüssel auch durch ein Schlüsselpaar oder einen Satz eindeutig zusammengehöriger Schlüssel gebildet sein kann. Diesbezüglich sind dem Fachmann weitere Schlüsselsysteme bekannt. Dieser Schlüssel oder Teilschlüssel wird sowohl in einer Speichereinheit als auch in einer Authentifizierungseinrichtung hinterlegt und ermöglicht somit eine eindeutige Authentifizierung einer Speichereinheit. In weiteren Schritten werden in einer Zugriffskontrolleinrichtung eine Zuordnungstabelle und eine Ausführungsanweisung hinterlegt.

Durch die erfindungsgemäßen Verfahrensschritte ist sichergestellt, dass die in den Speichereinheiten hinterlegten Dateneinheiten von der Infomlation über die Struktur bzw. über die Abhängigkeiten zwischen den Dateneinheiten getrennt abgelegt wird und dass außer- dem der direkte Zugriff auf die Dateneinheiten verhindert wird.

Ein Angreifer könnte bspw. versuchen eine Speichereinheit manipulieren, um darüber Zugriff auf andere Speichereinheiten zu erlangen. Um dies zu verhindern wird gemäß einer Weiterbildung vor einem Zugriff auf eine, im Speichermittel der Speichereinheit hinterlegte Dateneinheit, der Schlüssel von der Authentifizierungseinrichtung geprüft. Nur wenn der hinterlegte Schlüssel mit einem in der Authentifizierungseinrichtung hinterlegten Schlüssel übereinstimmt, ist sichergestellt, dass die aktuell im Zugriff befindliche Speichereinheit auch der ursprünglich authentifizierten Speichereinheit entspricht.

Eine Weiterbildung die sicherstellt, dass ein direkter Zugriff auf Speichereinheiten verhindert wird liegt darin, dass bei einer Zugriffsanfrage die Zuordnungstabelle abgefragt wird. Aufgrund der verteilten Ablage von Dateneinheiten in mehreren Speichereinheiten ist der Zusammenhang zwischen den einzelnen Dateneinheiten nur dadurch herstellbar, dass die Verknüpfung zwischen den Dateneinheiten bzw. insbesondere zwischen den Speichereinheiten, aus der Zuordnungstabelle ausgelesen wird.

Auch eine Weiterbildung bei der bei einer Zugriffsanfrage eines Benutzers oder einer Datenverarbeitungseinrichtung die Ausführungsanweisung abgefragt wird zielt darauf ab, einen missbräuchlichen Zugriff auf hinterlegte Daten in den Speichereinheiten zu verhindern. Diese Ausbildung ist ein weiteres Merkmal um zu verhindern, dass ein unbefugter Benutzer direkt auf Datensätze in einer Speichereinheit zugreifen kann. Nur mittels einer entsprechenden Ausführungsanweisung die wiederum nur über die Zugriffskontrolleinrichtung ausgelesen werden kann, ist ein Zugriff auf Dateneinheiten in der Speichereinheit möglich.

Gemäß einer vorteilhaften Weiterbildung wird vor einem Zugriff auf die im Speichermittel der Speichereinheit hinterlegte Zuordnungstabelle, der elektronische Schlüssel von der Authentifizierungseinrichtung geprüft. Diese Ausbildung stellt ein weiteres Sicherheitsmerkmal dar, als somit auch die Authentizität der Zuordnungstabelle geprüft werden kann. Da über diese Tabelle u.a. die Beziehung zwischen den Dateneinheiten hergestellt wird, ist es von besonderer Bedeutung, dass der Inhalt der Zuordnungstabelle authentisch ist.

Gleiches gilt für eine Weiterbildung, nach der vor einem Zugriff auf die im Speichermittel der Speichereinheit hinterlegte Ausführungsanweisung, der elektronische Schlüssel von der Authentifizierungseinrichtung geprüft wird. Somit lässt sich die Authentizität der Ausführungsanweisungen eindeutig sicherstellen.

Wie bereits zuvor beschrieben, hat eine Weiterbildung bei der der in der Zugriffsanweisung hinterlegte Schlüssel von der Authentifizierungseinrichtung geprüft wird den Vorteil, dass nur eine Zugriffsanweisung mit einem korrekten Schlüssel von der Authentifizierungseinrichtung akzeptiert wird und anschließend einen Zugriff auf Speichereinheiten ermöglicht.

Ebenfalls im Hinblick auf die eindeutige Sicherung des Zugriffs ist eine Weiterbildung von Vorteil, bei der sich eine Ablaufsteuerung gegenüber der Authentifizierungseinrichtung mit einem korrekten hinterlegten Schlüssel authentifiziert. Durch diese Weiterbildung ist nun sichergestellt, dass auch die Ausführung des Zugriffs auf die Speichereinheiten ausschließlich durch eine korrekt identifizierte und authentifizierte Ablaufsteuerung erfolgen kann. Somit wird es einem potenziellen Angreifer auch nicht möglich sein, mittels einer manipulierten Ablaufsteuerung Zugriff auf die Speichereinheiten zu erlangen.

Wird bei Prüfung der präsentierten Schlüssel mit hinterlegten Schlüsseln eine Unstimmigkeit erkannt, wird anspruchsgemäß eine Alarmmeldung ausgegeben, sodass auf die fehlerhafte Authentifizierung sofort reagiert werden kann. Bevorzugt wird dann der laufende Zugriff gestoppt und es erfolgt eine Detailprüfung der Gründe die zu der Alarmmeldung geführt haben. Wesentlich dabei ist, dass für einen Zugriff auf eine Dateneinheit ggf. mehrere Schlüssel geprüft werden und nur bei erfolgreicher Prüfung aller Schlüssel, der Zugriff auf die Dateneinheiten gewährt wird. Manipuliert ein potenzieller Angreifer eine Komponente der verteilten Datenspeicherungseinrichtung wird ein Schlüssel nicht mehr mit einem hinterlegten Schlüssel übereinstimmen und es kommt somit zur Alarmauslösung und Verhinderung eines weiteren Zugriffs.

Weitere vorteilhafte Ausbildungen erhält man, wenn eine Zugriffssteuerung der Speichereinheiten, bei einer Anfrage der Ablaufsteuerung, einen hinterlegten zweiten elektronischen Schlüssel mit einem Schlüssel der Ablaufsteuerung vergleicht bzw. wenn der hinter- legte zweite elektronische Schlüssel von der Authentifizierungseinrichtung geprüft wird. Diese Ausbildungen ermöglichen eine so genannte Rückwärtsprüfung dahingehend, dass somit auch die Speichereinheit prüfen kann, ob es sich bei der anfragenden Ablaufsteuerung um die ursprünglich authentifizierte Ablaufsteuerung handelt. Ein potentieller Angreifer könnte die Ablaufsteuerung manipulieren und bekäme somit Zugriff auf die Speichereinheiten, was durch die anspruchgemäßen Weiterbildungen verhindert wird.

Von besonderer Bedeutung ist eine Weiterbildung, nach der die Zugriffssteuerung mittels einer übermittelten Ausführungsanweisung auf die Dateneinheiten zugreift, da somit sichergestellt ist, dass ein direkter Zugriff auf die Dateneinheiten verhindert wird bzw. nicht möglich ist. Bekannte Datenspeicherungseinrichtungen gestatten zumeist einen direkten Zugriff auf die Dateneinheiten. Durch eine manipulierte Ausführungseinrichtung erlangt ein potentieller Angreifer somit Zugriff auf Dateneinheiten. Die anspruchsgemäße Weiterbildung führt hier eine weitere Sicherheitsschranke ein, als dass ein Angreifer zusätzlich noch an die Ausführungsanweisungen gelangen müsste, um Zugriff auf die Dateneinheiten zu erlangen.

Zum besseren Verständnis der Erfindung wird diese anhand der nachfolgenden Figuren näher erläutert.

Es zeigen jeweils in stark schematisch vereinfachter Darstellung:
Fig. 1 Ein Prinzipschaltbild der erfindungsgemäßen Datenspeicherungseinrichtung;
Fig. 2 Ein Ablaufsequenzdiagramm eines möglichen Zugriffs auf Dateneinheiten;
Fig. 3 Eine beispielhafte Darstellung des Sicherheitskonzepts der erfindungsgemäßen Datenspeicherungseinrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen über tragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Ebenso können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 1O oder weniger, z.B. 1 bis 1,7, oder 3,2 bis 8,1 oder 5,5 bis 10.

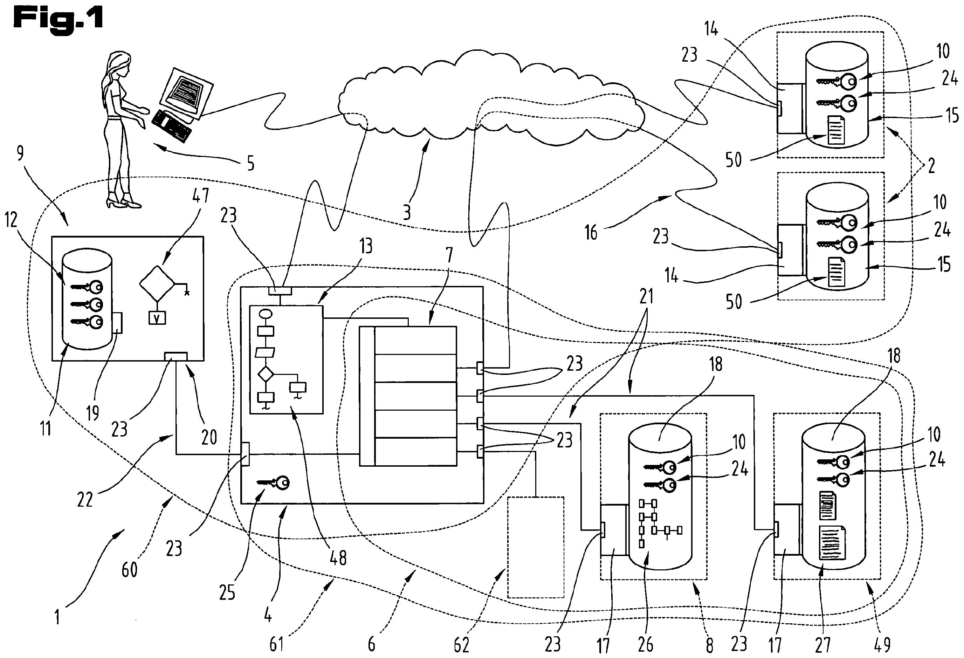

Fig. 1 zeigt ein Prinzipschaltbild der verteilten Datenspeichereinrichtung 1, bei der Daten bzw. Information 50, in einer Mehrzahl von Speichereinheiten 2 hinterlegt sind. Die Speichereinheiten 2 sind über ein Kommunikationsnetzwerk 3 mit einer Ablaufsteuerung 4 verbunden. Die Ablaufsteuerung 4 ist dazu ausgebildet, eine Anfrage eines Benutzers 5 abzuarbeiten und aus den Speichereinheiten 2 die entsprechende Information abzurufen und an den Benutzer bzw. dessen Datenendgerät 5 zu übermitteln. Da die Speichereinheiten 2 ggf. verteilt angeordnet sein können, insbesondere auch an verschiedenen Standorten, sind die Informationseinheiten 50 derart auf einzelne Speichereinheiten 2 aufgeteilt, dass selbst bei Kenntnis des Inhalts einer gesamten Speichereinheit sowie von Teilen der darin hinterlegten Informationseinheiten, nicht auf den Inhalt einer anderen Speichereinheit zu- gegriffen werden kann, bzw. das kein vollständiger, verwertbarer Datensatz abfragbar ist. Daher weist die Ablaufsteuerung 4 eine Zugriffskontrolleinrichtung 6 auf, die zumindest durch ein Zugriffssteuerungsmodul 7 und zumindest ein Speichereinheit 8 gebildet ist. Von wesentlicher Bedeutung ist nun, dass in den Speichereinheiten 8, 49 der Zugriffskontrolleinrichtung 6 eine Zuordnungstabelle 26 bzw. Ausführungsanweisungen 27 hinterlegt sind. Durch diese verteilte Anordnung ist sichergestellt, dass in den Speichereinheiten 2 keine Beziehungen zwischen den Dateneinheiten 50 hinterlegt sind. Für die Sicherheit der hinter- legten Daten ist es von weiterer besonderer Bedeutung , dass die Ablaufsteuerung 4 mit einer Authentifizierungseinrichtung 9 verbunden ist. Die Authentifizierungseinrichtung 9 ist insbesondere dazu ausgebildet, jeden Zugriff auf die Speichereinheiten 2 bzw. die Speichereinheit 8 auf Plausibilität zu prüfen und somit sicherzustellen, dass nur jene Zugriffe durchgeführt werden können, die über die entsprechenden Sicherheitsmerkmale verfügen.

Um nun eine Beziehung zwischen den Speichereinheiten 2, 8,49 und der Ablaufsteuerung 4 herstellen zu können um so einen missbräuchlichen Zugriff verhindern zu können, ist in den Speichereinheiten 2, 8, 49 jeweils ein erster eindeutiger elektronischer Schlüssel 10 hinterlegt. Zu den hinterlegten elektronischen Schlüsseln 10 sind in einem Schlüsselspeicher 11 korrespondierende Schlüssel 12 hinterlegt, sodass es immer eine eindeutige Beziehung zwischen einem ersten elektronischen Schlüssel 10 und einem hinterlegten elektronischen Schlüssel 12 gibt. Soll nun bspw. auf eine Speichereinheit 2 zugegriffen werden, wird von der Ablaufsteuerung 4, insbesondere vom Zugriffssteuerungsmodul 7 der erste elektronische Schlüssel 10 der Speichereinheit 2 ausgelesen und von der Authentifizierungseinrichtung 9 geprüft. Gibt es eine Übereinstimmung, wird der Zugriff auf die Speichereinheit gewährt und die weitere Abfolge gemäß hinterlegter hierarchischer Abläufe 48 durchgeführt. Im Fall einer fehlerhaften Authentifizierung kann von der Authentifizierungseinrichtung 9 bzw. von der Ablaufsteuerung 4 ein Alarm ausgelöst werden, wodurch Sicherheitsmaßnahmen aktiviert werden und ggf. auch physische Schutzmaßnahmen für die Datenspeichereinrichtung aktiviert werden. Bevorzugt sind sowohl die ersten 10, als auch die zweiten 24 Schlüssel voneinander unabhängig, korrespondieren aber jeweils mit hinterlegten Schlüsseln 12.

Jede erste Speichereinheit 2 weist eine Zugriffssteuerung 14 und ein Speichermittel 15 auf, wobei die Zugliffssteuerung 14 derart ausgebildet ist, dass eine über die Kommunikationsverbindung 16 eintreffende Anfrage keinen direkten Zugriff auf das Speichermittel 15 erlangt. Auch die zweite Speichereinheit 8 weist bevorzugt eine Zugriffssteuerung 17 und ein Speichermittel 18 auf, sodass auch hier ein direkt e r Zugriff auf das Speichermittel 18 verhindert wird.

An die im Schlüsselspeicher 11 hinterlegten elektronischen Schlüssel 12 sind hohe Anforderungen hinsichtlich ihrer Eindeutigkeit gestellt. Insbesondere muss sich eine eindeutige Beziehung zwischen einem, im Speichermittel hinterlegten elektronischen Schlüssel 10, 24 und einem Referenzschlüssel 12 herstellen lassen, wobei diese Beziehung derart gestaltet sein kann, dass vom Modulschlüssel 10, 24 nicht auf den Referenzschlüssel 12 geschlossen werden kann. In einer besonders vorteilhaften Weiterbildung weist die Authentifizierungseinrichtung 9 ein Modul 19 zur Generierung eindeutiger elektronischer Schlüssel auf. Mit diesem Modul 19 ist es der Authentifizierungseinrichtung 9 nun möglich, ohne Erfordernis einer externen Vorrichtung bzw. Zertifizierungsstelle, selbsttätig eindeutige elektronische Schlüssel generieren zu können. Durch diese Ausbildung wird in vorteilhafter Weise sichergestellt, dass die elektronischen Schlüssel 12 in einem definierten und bekannten Sicherheitsumfeld generiert wurden und somit die Gefahr einer externen Beeinflussung bzw. Verfälschung der Schlüssel weitestgehend verhindert wird. Die Sicherheit von elektronischen Schlüsseln basiert zumeist auf mathematischen Methoden, insbesondere auf Gleichungssystemen, deren Berechnung bzw. Lösung äußerst komplex ist. Insbesondere liegt ein wesentliches Merkmal darin, dass die erforderliche Rechenleistung und damit auch die erforderliche Zeit, zur Lösung der Gleichungssysteme sehr gut abschätzbar sind. Ein elektronischer Schlüssel kann daher derart ausgebildet sein, dass die erforderliche Zeit zur Umgehung des Schlüssels größer ist, als die Relevanz der auszuhorchenden Information. Die Authentifizierungseinrichtung 9 kann bspw. durch eine Datenverarbeitungseinrichtung gebildet sein, es ist jedoch auch eine Ausbildung als Modul möglich, das nur über einen Kommunikationsanschluss 20 abfragbar ist und darüber auch das Authentifizierungsergebnis bereitstellt.

Aus Effizienz und Sicherheitsgründen kann die erfindungsgemäße verteilte Datenspeichereinrichtung 1 auch räumlich verteilt angeordnet sein, sodass zwischen den einzelnen Modulen, wie den Speichereinheiten 2, 8, 49 der Authentifizierungseinrichtung 9 und der Ablaufsteuerung 4 ein Kommunikationsnetzwerk 3 zwischengeschaltet ist, welches prinzipiell als unsicheres Kommunikationsnetzwerk angesehen werden muss. Beispielsweise kann es sich um das öffentlich verfügbare und zugängliche Internet handeln, sodass mit der Gefahr eines missbräuchlichen Zugriffs auf die Kommunikationsverbindungen 16, 21 gerechnet werden muss. In einer vorteilhaften Weiterbildung ist es-nun möglich, jede Kommunikationsverbindung zu sichern, in dem an den jeweiligen Endpunkten der Kommunikationsverbindung ein Verschlüsselungsmodul 23 angeordnet ist. Mit einem derartigen Verschlüsselungsmodul ist nun sichergestellt, dass zwischen den Endpunkten, bspw. zwischen einer Speichereinheit 2 und der Ablaufsteuerung 4, die Kommunikationsverbindung 16 auf Basis einer so genannten End-zu-End-Verschlüsselung gesichert ist. Selbst bei einem missbräuchlichen Zugriff auf die Kommunikationsverbindung 16 ist ein Zugriff auf die übertragenen Daten weitestgehend unmöglich.

Durch die Hinterlegung erster elektronischer Schlüssel 10 lässt sich eine Beziehung zwischen den Speichereinheiten 2, 8, 49 herstellen. Somit kann die Ablaufsteuerung 4, insbesondere mittels der Authentifizierungseinrichtung 9 sicherstellen, dass jeweils auf die kor- rekte Speichereinheit zugegriffen wird. Insbesondere ist dadurch sichergestellt, dass es einem potenziellen Angreifer nicht möglich ist, eine Speichereinheit durch eine manipulierte zu ersetzen, um so Zugriff auf die verteilten Dateneinheiten zu erlangen. Durch die Festlegung eindeutiger Kommunikationswege und Zugriffsszenarien ist es einer derart manipulierten Speichereinheit somit nicht möglich, einen direkten Zugriff auf eine andere Speichereinheit oder ein anderes Modul zu erlangen. Ein missbräuchlicher Zugriffsversuch bleibt auf die Speichereinheit beschränkt, da aufgrund der ausgezeichneten Kommunikationswege die anderen Module, außer der Ablaufsteuerung, für die manipulierte Speichereinheit nicht sichtbar sind. In einer Weiterbildung sind nun in den Speichereinheiten zweite elektronische Schlüssel 24 hinterlegt, die mit einem Schlüssel 25 der Ablaufsteuerung 4 und/oder mit einem hinterlegten Schlüssel 12 in der Authentifizierungseinrichtung 9 korrespondieren. Durch diese Weiterbildung ist nun bspw. die Zugriffssteuerung 14, 17 in der Lage, eine Anfrage der Ablaufsteuerung 4, insbesondere des Zugriffsteuerungsmoduls 7 auf Gültigkeit zu prüfen. Bei einer Anfrage wird bspw. von der Ablaufsteuerung der zu- geordnete Schlüssel 25 an die Zugriffssteuerung 14, 17 übertragen bzw. wird von dieser abgefragt. Die Zugriffssteuerung kann den Schlüssel 25 nun von der Authentifizierungseinrichtung 9 prüfen lassen bzw. kann die Zugriffssteuerung die Prüfung mit dem hinter- legten zweiten Schlüssel 24 selbst durchführen. Diese Weiterbildung stellt nun sicher, dass jede Speichereinheit für sich prüfen kann, ob eine eingehende Abfrageanforderung auch von einer gültigen, insbesondere einer zugelassenen Ablaufsteuerung 4 herrührt. Um bei einer derart ausgebildeten verteilten Datenspeichereinrichtung 1 in missbräuchlicher Weise einen Zugriff auf hinterlegte Dateneinheiten zu erlangen, müsste ein potenzieller Angreifer eine Mehrzahl elektronischer Schlüssel sowie die Authentifizierungseinrichtung gleichzeitig manipulieren. Bevorzugt wird die Authentifizierungseinrichtung 9 und ggf. auch die Ablaufsteuerung 4 in einer besonders gesicherten Umgebung betrieben, insbesondere wer- den diese Einrichtungen zumeist in Hochsicherheitsbereichen von Datencentern oder Finanzinstituten untergebracht sein, wodurch sowohl ein persönlicher als auch fernwirkender Zugriff auf diese Module im höchsten Maße unwahrscheinlich ist. Da diese Module jedoch die Kernkomponenten der erfindungsgemäßen verteilten Datenspeichereinrichtung sind und insbesondere Authentifizierungs- und Kontrollaufgaben übernehmen, ist somit auch eine Sicherung der in den Speichereinheiten hinterlegten Dateneinheiten weitestgehend sichergestellt. Auch ist durch die verteilte Anordnung die ggf. auch räumlich getrennt aus- gebildet sein kann, sichergestellt, dass ein missbräuchlicher Zugriff äußerst schwierig ist, da dieser zeitlich und örtlich exakt koordiniert durchgeführt werden müsste, um nicht sofort einen Alarm auszulösen und damit den missbräuchlichen Zugriffsversuch zu verhindern.

Ein weiteres wesentliches Merkmal der erfindungsgemäßen Datenspeicherungseinrichtung liegt darin, dass die Nutzdaten von den Beziehungen zwischen den Nutzdaten getrennt abgelegt sind und ein direkter Zugriff auf die Nutzdaten nicht möglich ist. In einer Speichereinheit 8 ist dazu bspw. eine Zuordnungstabelle 26 hinterlegt, wobei nur über diese Zuordnungstabelle eine sinnvolle Verknüpfung zwischen den Dateneinheiten der Speichereinheiten hergestellt werden kann. Bei bekannten verteilten Datenspeicherungseinrichtungen ist eine derartige Zuordnungstabelle zusammen mit den Datensätzen in den Speichereinheiten abgelegt. Daher steht einem potenziellen Angreifer die gesamte Information zur Verfügung, um Datensätze aus den verteilten Speichereinheiten auslesen zu können.

Bei der erfindungsgemäßen verteilten Datenspeicherungseinrichtung muss sich sowohl die Speichereinheit 2 der Dateneinheiten, als auch die Speichereinheit 8 der Zuordnungstabelle 26 und die Speichereinheit 49 der Ausführungsanweisungen 27 gegenüber der Authentifizierungseinrichtung 9 korrekt identifizieren, um einen Zugriff freizugeben. Auch ist es bei bekannten Datenspeicherungseinrichtungen üblich, einer Ablaufsteuerung 4 direkten Zugriff auf das Speichermittel 15 einer Speichereinheit 2 zu gewähren. Tm Gegensatz dazu wird bei der erfindungsgemäßen Datenspeicherungseinrichtung eine weitere Sicherheitszone eingeführt, in dem ein direkter-Zugriff auf Speichermittel 15 verhindert wird, da ein Zugriff auf Speichermittel 15 nur über vordefinierte, geprüfte und authentifizierte Ausführungsanweisungen 27 möglich ist.

Eine besonders vorteilhafte Weiterbildung liegt darin, dass innerhalb der Datenspeicherungseinrichtung Sicherheitszonen 60, 61 ausgebildet sind, wobei eine derartige Sicherheitszone mehrere Module umfasst, die ggf. auch verteilt angeordnet sein können. Diese Sicherheitszonen stellen eine zweite Sicherheitsschicht dar, die zusätzlich zur Trennung von Nutz- und Beziehungsinformation angeordnet ist. Da sich die Sicherheitszonen über- schneiden, ist jederzeit eine gegenseitige Kontrolle bzw. Überwachung der laufenden Transaktionen und Anfragen möglich. Beispielsweise könnte mit der Ablaufsteuerung ein Kontrollmodul 62 verbunden sein, das die Abläufe in den Sicherheitszonen überwacht und bei Unstimmigkeiten die Transaktionen sofort stoppt und ggf. eine Alarmmeldung abgibt. Diese Sicherheitszonen erschweren einen Angriffsversuch ganz wesentlich, da der Angreifer somit einen äußerst präzise vorbereiteten Angriff starten müsste. Dabei wäre eine Mehrzahl von Modulen in genau festgelegter Abfolge zu manipulieren, was ohne sehr genaue Kenntnisse des internen Aufbaus und Ablaufs äußerst schwierig ist. Ein schrittweiser Angriff wird somit nicht zielführend sein, da dieser nicht unbemerkt bliebe. Der Aufwand für einen Angriffsversuch ist daher sehr hoch, was in Kombination mit einem sehr wahrscheinlichen Scheitern, eine sehr hohe Abschreckungswirkung bringt.

In einer Weiterbildung könnte noch eine externe Kontrolleinrichtung vorhanden sein, welche zusätzlich die ablaufenden Transaktionen auf ihre Plausibilität überprüft. Somit könnten bspw. die tatsächlich stattfindenden Abläufe mit hinterlegten Abläufen verglichen wer- den, um so eine Abweichung feststellen zu können. Weiters ist es möglich, eine Transaktion zu validieren, also zu prüfen, ob eine an einem Modul ankommende Anfrage mit der ursprünglich abgesandten Anfrage übereinstimmt, oder ob es am Kommunikationsweg zu einer Manipulation der Anfrage gekommen ist.

Diese vorteilhaften Weiterbildungen bringen nun eine deutliche Steigerung der Sicherheit von hinterlegten Dateneinheiten in einer verteilten Datenspeicherungseinrichtung, ohne dass der Aufwand für die Anordnung der einzelnen Module der Datenspeicherungseinrichtung wesentlich ansteigt. Insbesondere sind nur wenige Komponenten in einer hochsicheren Umgebung anzuordnen, da potenzielle Angreifer auch mit vollständiger Kenntnis einer Speichereinheit keine verwertbare Information aus den ausgelesenen Dateneinheiten erlangen können. Die Module der erfindungsgemäßen Datenspeicherungseinrichtung können somit im Hinblick auf die Leistungsanforderung an das Betreibersystem möglichst optimal angeordnet werden, ohne dass es dadurch zu einem Verlust der Sicherheit kommt.

In einer vorteilhaften Weiterbildung könnten bspw. die Zugriffssteuerungen 14, 17 derart ausgebildet sein, dass sie einen Teile der Authentifizierung selbst durchführen können. Beispielsweise kann von der Ablaufsteuerung und/oder der Authentifizierungseinrichtung ein Ergebnis einer Teilverschlüsselung an die Zugriffssteuerung übermittelt werden, die daraufhin mit einem hinterlegten Schlüssel 10, 24 dieselbe Teilverschlüsselung durchführt und das erhaltene Ergebnis überprüft. Stimmt das übermittelte und das erstellte Ergebnis übe rein, wird ein Zugriff gewährt, ansonsten wird ggf. ein Alarm ausgelöst. Diese Weiterbildung hat den entscheidenden Vorteil, dass hinterlegte Schlüssel nicht über die Kommunikationsverbindung übertragen werden müssen, was ein weiteres bedeutendes Sicherheitsmerkmal der erfindungsgemäßen Datenspeicherungseinrichtung darstellt.

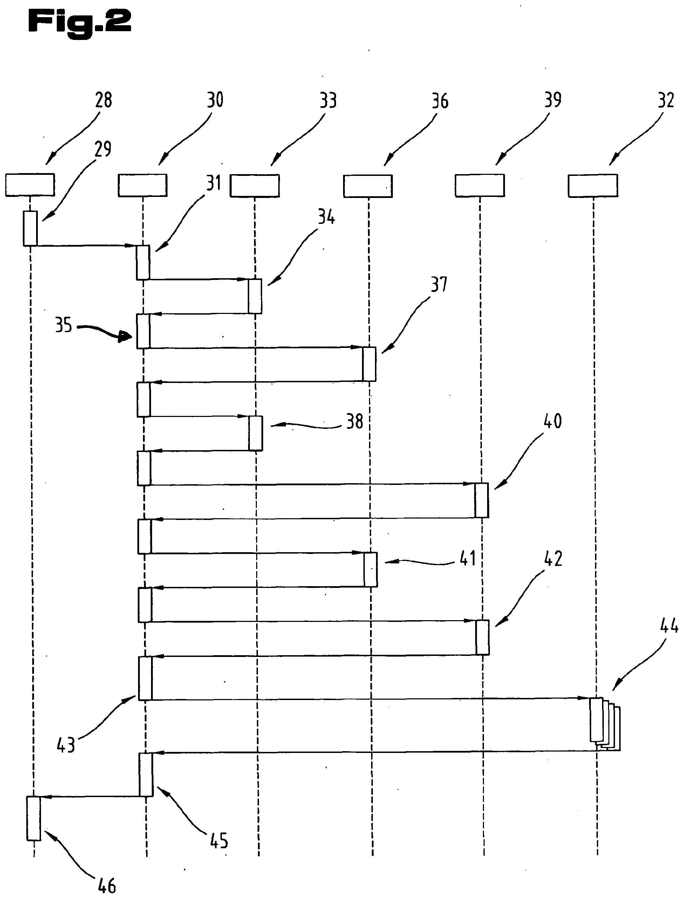

Fig. 2 zeigt ein mögliches Ablaufsequenzdiagramm eines Zugriffs auf Dateneinheiten in einer verteilten Datenspeicherungseinrichtung. Ein Benutzer oder eine Datenverarbeitungseinrichtung 28 löst im Zuge der Abarbeitung eines Vorgangs wie bspw. einer Steuerungsanweisung, einen Datenabfragevorgang 29 aus. Dieser Datenabfragevorgang wird an die Ablaufsteuerung 30 übermittelt und von dieser in entsprechende Teilaufgaben aufbereitet 31. Eine Teilaufgabe kann nun darin bestehen, aus einer Speichereinheit 32 eine Mehrzahl von Datensätze bzw. Informationen abzurufen. Um auf die entsprechende Datensätze zugreifen zu können, muss die Ablaufsteuerung die entsprechenden Beziehungen zwischen den Dateneinheiten ermitteln, um auf die korrekte Speichereinheit zugreifen zu können. Ein wesentliches Sicherheitskonzept der erfindungsgemäßen Datenspeicherungseinrichtung liegt nun darin, dass jede einzelne Komponente dahingehend überprüft werden kann, ob diese für den aktuell initiierten Vorgang zugelassen ist. Dazu wird von der Ablaufsteuerung 30 in einem ersten Schritt ein hinterlegter eindeutiger Schlüssel aus der Zuordnungstabelle 33 ausgelesen 34. Gemäß einer Weiterbildung könnte das schlüsselbasierte Sicherungssystem auch dahingehend ausgebildet sein, dass nicht der Schlüssel selbst ausgelesen wird, sondern dass ein Schlüsselergebnis generiert wird, welches von der Ablaufsteuerung 30 mit einem Referenzschlüssel verglichen werden kann. Der ausgelesene Schlüssel bzw. das Teilergebnis wird entsprechend aufbereitet 35 und an die Authentifizierungseinrichtung 36 übermittelt. Diese führt nun eine Vergleichsprüfung mit hinterlegten Schlüsseln durch 37, um somit die Authentizität des präsentierten Schlüssels zu prüfen. Bei einer erfolgreichen Prüfung ist die Authentizität der Zuordnungstabelle 33 sichergestellt, und die Ablaufsteuerung 30 kann daraufhin eine Ausleseanfrage erstellen und die erforderlichen Beziehungen aus der Zuordnungstabelle 33 auslesen 38.

Da ein weiteres Sicherheitsmerkmal der erfindungsgemäßen verteilten Datenspeicherungseinrichtung darin besteht, dass auf die Speichereinheiten 32 nicht direkt zugegriffen wer- den kann, werden von der Ablaufsteuerung 30 im nächsten Schritt die Zugriffssteuerungsanweisungen ausgelesen. Dazu wird in einem ersten Schritt ein eindeutiger Schlüssel der Arbeitsanweisungen 39 ausgelesen 40, ggf. aufbereitet und wiederum der Authentifizierungseinrichtung 36 zur Prüfung 41 übermittelt. Nach erfolgreicher Prüfung wird eine entsprechende Anfrage generiert und anschließend die Arbeitsanweisungen ausgelesen 42. Ein missbräuchlicher direkter Zugriff auf die Speichereinheiten lässt sich nicht mit Sicherheit ausschließen, daher ist es von ganz besonderem Vorteil, wenn es bei einem derartigen Zugriff zu keinem sinnvoll nutzbaren Informationsgewinn für den Angreifer kommt. Ins- besondere liegen die Informationseinheiten in nicht zusammenhängender Form und ggf. zusätzlich verschlüsselt vor.

Nach diesen Verfahrensschritten ist nun sichergestellt, dass die Beziehungen zwischen den Dateneinheiten und die Zugriffsanweisungen authentisch sind. Mit diesen Datensätzen ist es der Ablaufsteuerung 33 nun möglich, eine entsprechende Speicheranfrage 43 zu generieren, um daraufhin auf die Speichereinheit bzw. Einheiten 32 zugreifen zu können und die entsprechend geforderten Daten auszulesen 44. Die ausgelesenen Datensätze werden von der Ablaufsteuerung 33 entsprechend aufbereitet 45 und an den Benutzer bzw. die Datenverarbeitungseinrichtung 28 zurück übermittelt, wo sie ggf. entsprechend weiterverarbeitet, aufbereitet oder dem Benutzer zur Anzeige gebracht werden 46.

Das erfindungsgemäße Verfahren kann ggf. noch eine weitere Sicherheitsfunktionalität ausbilden bspw. dadurch, dass ein bestimmtes Abfrageszenario eingehalten werden muss. Bei einem Zugriff auf eine Speichereinheit oder einer Prüfungsanfrage an die Authentifizierungseinrichtung könnte bspw. in einem ersten Schritt eine unvollständige Anfrage oder ein scheinbar falscher Schlüssel übermittelt werden, darauf folgt eine korrekt formatierte Anfrage. Ein Angreifer würde diese erste Fehlanfrage ignorieren und sofort eine korrekt formatierte Anfrage senden, wodurch ein missbräuchlicher Zugriffsversuch erkannt werden kann.

In einer Weiterbildung ist es jedoch auch möglich, dass zusammen mit der Anfrage ein Zeitstempel übertragen wird, wobei für ein korrektes Abfrageszenario eine bestimmte zeitliche Abfolge der Anfragen eingehalten werden muss. Ohne Kenntnis der zeitlichen Zusammenhänge würde ein Angreifer die Anfragen zeitlich unkoordiniert absenden, wodurch wiederum ein Manipulationsversuch erkennbar ist. Des Weiteren könnte die Zeitdifferenz zusätzlich eine pseudozufällige Abhängigkeit aufweisen, so dass die folgende Anfrage mit einem Zeitstempel eintreffen muss, der dem Erwarteten entspricht. Ein Zeitstempel ist in diesem Zusammenhang nicht als absolute Zeitangabe zu verstehen, da es durch unter- schiedliche Laufzeiten auf den Kommunikationswegen zu nicht einschätzbaren Zeitverzögerungen kommen kann. Über diese Zeitstempel werden symbolisch zeitliche Abhängigkeiten festgelegt die zur korrekten Durchführung der Transaktion eingehalten werden müssen. Beispielsweise kann somit ein sendendes Modul festlegen, in welcher zeitlichen Reihenfolge Anfragen abgesandt werden. Die empfangenden Module können dann anhand der Zeitstempel feststellen, ob die sequentiell eintreffenden Anfragen mit der ursprünglich festgelegten Reihenfolge übereinstimmen.

Ein potentieller Angreifer sieht sich somit mit einer Vielzahl von Hürden konfrontiert, die exakt synchronisiert zu überwinden sind, um einen Manipulationsversuch verschleiern zu können.

Die Figur zeigt eine mögliche Ausbildung des Verfahrens, um auf Datensätze in der erfindungsgemäßen verteilten Datenspeicherungseinrichtung zugreifen zu können. Nicht dargestellt in dieser Figur sind zusätzliche Sicherungsschritte zur Verschlüsselung der Kommunikation zwischen den einzelnen Modulen bzw. Einrichtungen.

Gemäß einer vorteilhaften Weiterbildung kann in den Speichermitteln noch ein zweiter elektronischer Schlüssel hinterlegt sein, wodurch es der Zugriffssteuerung der Zuordnungs-tabelle bzw. der Zugriffssteuerung der Ausführungsanweisung möglich ist, die Authentizität der Ablaufsteuerung zu prüfen. Somit ist in vorteilhafter Weise eine doppelte Authentizitätsprüfung möglich, was den Aufwand für einen potenziellen Angreifer wesentlich er- höht und somit eine deutliche Steigerung der Datensicherheit und insbesondere Unversehrtheit der Daten sicherstellt.

Im Gegensatz zu bekannten Datenspeicherungseinrichtungen hat die erfindungsgemäße Ausbildung den ganz entscheidenden Vorteil, dass die Information über die Struktur der Nutzdaten von den eigentlichen Nutzdaten getrennt ist und insbesondere in verteilten Speichereinheiten hinterlegt ist. Durch diese Trennung, die ggf. auch durch eine räumliche und örtliche Trennung gebildet sein kann, lässt sich ein missbräuchlicher Zugriff auf hinterlegte Daten ganz wesentlich erschweren, da ein potenzieller Angreifer eine Mehrzahl von Einrichtungen gleichzeitig manipulieren müsste , was im höchsten Masse unwahrscheinlich ist, da sich ein derart hoher Manipulationsaufwand kaum gegenüber einem Systemadministrator bzw. gegenüber automatischen Sicherungsmechanismen verbergen ließe. Insbesondere werden ggf. auch einzelne Module in hoch gesicherten Räumen, bspw. in Rechenzentren von Finanzinstituten untergebracht sein, was den Zugriff darauf wesentlich erschwert. Insbesondere wird durch die erfindungsgemäße Ausbildung der verteilten Datenspeicherungseinrichtung sichergestellt, dass ein potenzieller Angreifer selbst bei vollständiger Kenntnis einer Speichereinheit daraus keinen Nutzen ziehen kann, da ihm die Beziehungen zu anderen Speichereinheiten und die entsprechenden Zugriffsanweisungen fehlen.

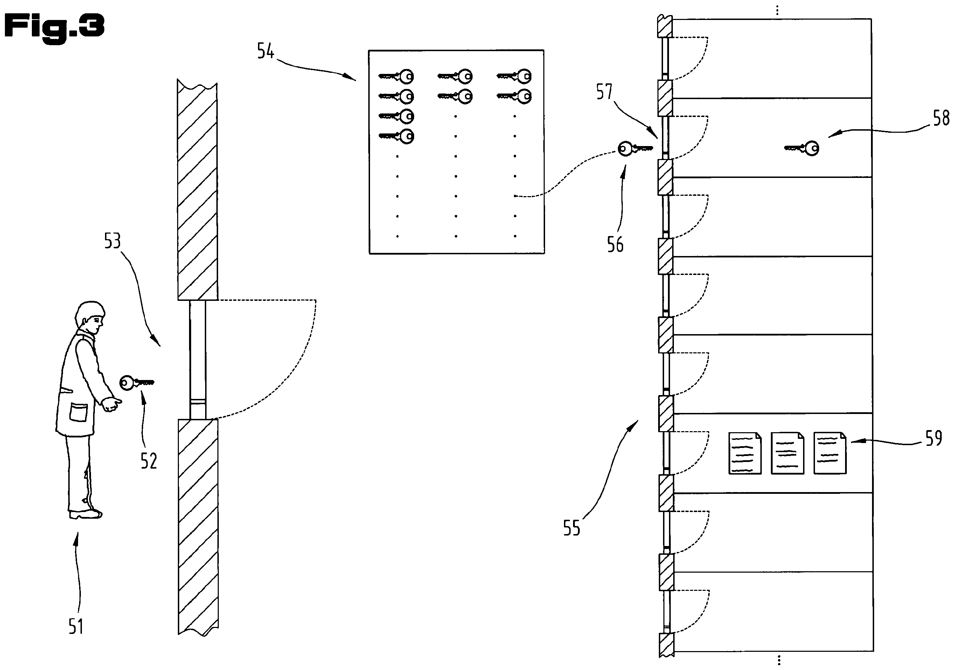

Figur 3 zeigt beispielhaft dargestellt, das Konzept der Sicherheitszonen 60, 61 der erfindungsgemäßen verteilten Datenspeicherungseinrichtung. Durch die erfindungsgemäße Trennung der Nutzdateneinheiten von Kontroll- und Zugriffsinformation, in Kombination mit einer Authentifikation jedes Zugriffs, ergeben sich für einen potentiellen Angreifer eine Mehrzahl von Hürden. Zur Veranschaulichung beschreibt die Figur den Zugriffschutz durch eine Analogiedarstellung mit Türen, Schlüsseln und Schlösser.

Durch Manipulation einer Komponente gelangt ein Angreifer 51 bspw. in den Besitz eines Schlüssels 52 um damit eine Tür 53 zu öffnen. Diese Tür könnte bspw. die Zuordnungstabelle sein. Durch diese Manipulation gelangt der Angreifer in den Besitz von n-Schlüssel 54 und betritt einen Raum mit m-Türen. Um weiter gelangen zu können, muss der Angreifer aus den vorhandenen Schlüsseln 54 einen passenden Schlüssel 56 auswählen, um eine weitere Tür öffnen zu können. Wesentlich ist nun; dass der Angreifer auch die entsprechende Tür 57 kennen muss, da bei einem fehlerhaften Zugriffsversuch bspw. um eine Mehrzahl von Türen zu versuchen, die Manipulation sofort erkannt werden würde. Kann der Angreifer die Tür 57 öffnen bspw. die Ausführungsanweisungen, gelangt er in den Besitz eines weiteren Schlüssels 58, der wiederum eine der möglichen Türen 55 öffnet. Um weiterzukommen und Zugriff auf die relevanten Dateneinheiten 59 zu erlangen, muss der Angreifer wiederum eine spezielle Tür der vielen möglichen öffnen.

Die Verwendung eines falschen Schlüssels bzw. ein Zugriffsversuch auf eine falsche Tür macht den Manipulationsversuch eindeutig erkennbar, worauf entsprechend reagiert wer- den kann. Insbesondere ist ein mehrmaliger Testangriff nach dem try-and-error Prinzip nicht möglich, da ein einmaliger ungültiger Zugriffsversuch bereits eine Alarmmeldung auslösen kann.

Die Ausführungsbeispiele zeigen mögliche Ausführungsvarianten der verteilten Datenspeicherungseinrichtung wobei an dieser Stelle bemerkt sei, dass die Erfindung nicht auf die speziell dargestellten Ausführungsvarianten derselben eingeschränkt ist, sondern viel- mehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

In der Fig. 2 ist eine weitere und gegebenenfalls für sich eigenständige Ausführungsform der verteilten Datenspeicherungseinrichtung gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Fig. 1 hingewiesen bzw. Bezug genommen.

Der Ordnung halber sei abschließend darauf hingewiesen, dass zum besseren Verständnis des Aufbaus der verteilten Datenspeicherungseinrichtung diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Figuren gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Das erfindungsgemäße Verfahren kann ggf. noch eine weitere Sicherheitsfunktionalität ausbilden bspw. dadurch, dass ein bestimmtes Abfrageszenario eingehalten werden muss. Bei einem Zugriff auf eine Speichereinheit oder einer Prüfungsanfrage an die Authentifizierungseinrichtung könnte bspw. in einem ersten Schritt eine unvollständige Anfrage oder ein scheinbar falscher Schlüssel übermittelt werden, darauf folgt eine korrekt formatierte Anfrage. Ein Angreifer würde diese erste Fehlanfrage ignorieren und sofort eine korrekt formatierte Anfrage senden, wodurch ein missbräuchlicher Zugriffsversuch erkannt werden kann.

In einer Weiterbildung ist es jedoch auch möglich, dass zusammen mit der Anfrage ein Zeitstempel übertragen wird, wobei für ein korrektes Abfrageszenario eine bestimmte zeitliche Abfolge der Anfragen eingehalten werden muss. Ohne Kenntnis der zeitlichen Zusammenhänge würde ein Angreifer die Anfragen zeitlich unkoordiniert absenden, wodurch wiederum ein Manipulationsversuch erkennbar ist. Des Weiteren könnte die Zeitdifferenz zusätzlich eine pseudozufällige Abhängigkeit aufweisen, so dass die folgende Anfrage mit einem Zeitstempel eintreffen muss, der dem Erwarteten entspricht. Ein Zeitstempel ist in diesem Zusammenhang nicht als absolute Zeitangabe zu verstehen, da es durch unterschiedliche Laufzeiten auf den Kommunikationswegen zu nicht einschätzbaren Zeitverzögerungen kommen kann. Über diese Zeitstempel werden symbolisch zeitliche Abhängigkeiten festgelegt die zur korrekten Durchführung der Transaktion eingehalten werden müssen. Beispielsweise kann somit ein sendendes Modul festlegen, in welcher zeitlichen Reihenfolge Anfragen abgesandt werden. Die empfangenden Module können dann anhand der Zeitstempel feststellen, ob die sequentiell eintreffenden Anfragen mit der ursprünglich festgelegten Reihenfolge übereinstimmen.
Ein potentieller Angreifer sieht sich somit mit einer Vielzahl von Hürden konfrontiert, die exakt synchronisiert zu überwinden sind, um einen Manipulationsversuch verschleiern zu können.

Die Figur zeigt eine mögliche Ausbildung des Verfahrens, um auf Datensätze in der erfindungsgemäßen verteilten Datenspeicherungseinrichtung zugreifen zu können. Nicht dargestellt in dieser Figur sind zusätzliche Sicherungsschritte zur Verschlüsselung der Kommunikation zwischen den einzelnen Modulen bzw. Einrichtungen.

Gemäß einer vorteilhaften Weiterbildung kann in den Speichermitteln noch ein zweiter elektronischer Schlüssel hinterlegt sein, wodurch es der Zugriffssteuerung der Zuordnungstabelle bzw. der Zugriffssteuerung der Ausführungsanweisung möglich ist, die Authentizität der Ablaufsteuerung zu prüfen. Somit ist in vorteilhafter Weise eine doppelte Authentizitätsprüfung möglich, was den Aufwand für einen potenziellen Angreifer wesentlich erhöht und somit eine deutliche Steigerung der Datensicherheit und insbesondere Unversehrtheit der Daten sicherstellt.

Im Gegensatz zu bekannten Datenspeicherungseinrichtungen hat die erfindungsgemäße Ausbildung den ganz entscheidenden Vorteil, dass die Information über die Struktur der Nutzdaten von den eigentlichen Nutzdaten getrennt ist und insbesondere in verteilten Speichereinheiten hinterlegt ist. Durch diese Trennung, die ggf. auch durch eine räumliche und örtliche Trennung gebildet sein kann, lässt sich ein missbräuchlicher Zugriff auf hinterlegte Daten ganz wesentlich erschweren, da ein potenzieller Angreifer eine Mehrzahl von Einrichtungen gleichzeitig manipulieren müsste, was im höchsten Masse unwahrscheinlich ist, da sich ein derart hoher Manipulationsaufwand kaum gegenüber einem Systemadministrator bzw. gegenüber automatischen Sicherungsmechanismen verbergen ließe. Insbesondere werden ggf. auch einzelne Module in hoch gesicherten Räumen, bspw. in Rechenzentren von Finanzinstituten untergebracht sein, was den Zugriff darauf wesentlich erschwert. Insbesondere wird durch die erfindungsgemäße Ausbildung der verteilten Datenspeicherungseinrichtung sichergestellt, dass ein potenzieller Angreifer selbst bei vollständiger Kenntnis einer Speichereinheit daraus keinen Nutzen ziehen kann, da ihm die Beziehungen zu anderen Speichereinheiten und die entsprechenden Zugriffsanweisungen fehlen.

Figur 3 zeigt beispielhaft dargestellt, das Konzept der Sicherheitszonen 60, 61 der erfindungsgemäßen verteilten Datenspeicherungseinrichtung. Durch die erfindungsgemäße Trennung der Nutzdateneinheiten von Kontroll- und Zugriffsinformation, in Kombination mit einer Authentifikation jedes Zugriffs, ergeben sich für einen potentiellen Angreifer eine Mehrzahl von Hürden. Zur Veranschaulichung beschreibt die Figur den Zugriffschutz durch eine Analogiedarstellung mit Türen, Schlüsseln und Schlösser.

Durch Manipulation einer Komponente gelangt ein Angreifer 51 bspw. in den Besitz eines Schlüssels 52 um damit eine Tür 53 zu öffnen. Diese Tür könnte bspw. die Zuordnungstabelle sein. Durch diese Manipulation gelangt der Angreifer in den Besitz von n-Schlüssel 54 und betritt einen Raum mit m-Türen. Um weiter gelangen zu können, muss der Angreifer aus den vorhandenen Schlüsseln 54 einen passenden Schlüssel 56 auswählen, um eine weitere Tür öffnen zu können. Wesentlich ist nun, dass der Angreifer auch die entsprechende Tür 57 kennen muss, da bei einem fehlerhaften Zugriffsversuch bspw. um eine Mehrzahl von Türen zu versuchen, die Manipulation sofort erkannt werden würde. Kann der Angreifer die Tür 57 öffnen bspw. die Ausführungsanweisungen, gelangt er in den Besitz eines weiteren Schlüssels 58, der wiederum eine der möglichen Türen 55 öffnet. Um weiterzukommen und Zugriff auf die relevanten Dateneinheiten 59 zu erlangen, muss der Angreifer wiederum eine spezielle Tür der vielen möglichen öffnen.

Die Verwendung eines falschen Schlüssels bzw. ein Zugriffsversuch auf eine falsche Tür macht den Manipulationsversuch eindeutig erkennbar, worauf entsprechend reagiert werden kann. Insbesondere ist ein mehrmaliger Testangriff nach dem try-and-error Prinzip nicht möglich, da ein einmaliger ungültiger Zugriffsversuch bereits eine Alarmmeldung auslösen kann.

Die Ausführungsbeispiele zeigen mögliche Ausführungsvarianten der verteilten Datenspeicherungseinrichtung wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

In der Fig. 2 ist eine weitere und gegebenenfalls für sich eigenständige Ausführungsform der verteilten Datenspeicherungseinrichtung gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Fig. 1 hingewiesen bzw. Bezug genommen.

Der Ordnung halber sei abschließend darauf hingewiesen, dass zum besseren Verständnis des Aufbaus der verteilten Datenspeicherungseinrichtung diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Figuren gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Verteilte Datenspeicherungseinrichtung | 38 | Beziehungen auslesen |
| | | 39 | Arbeitsanweisungen |
| 2 | Erste Speichereinheit | 40 | Schlüssel auslesen |
| 3 | Kommunikationsnetzwerk | 41 | Authentizität prüfen |
| 4 | Ablaufsteuerung | 42 | Anweisungen auslesen |
| 5 | Benutzer | 43 | Speicheranfrage |
| | | 44 | Daten auslesen |
| 6 | Zugriffskontrolleinrichtung | 45 | Datenaufbereitung |
| 7 | Zugriffssteuerungsmodul | | |
| 8 | Zweite Speichereinheit | 46 | Anzeige, Weiterverarbeitung, Aufbereitung |
| 9 | Authentifizierungseinrichtung | | |
| 10 | Erster elektronischer Schlüssel | 47 | Validierungseinrichtung |
| | | 48 | Hierarchische Abläufe |
| 11 | Schlüsselspeicher | 49 | Weitere Speichereinheit |
| 12 | Elektronische Schlüssel | 50 | Dateneinheit |
| 13 | Ablaufsteuerungsmodul | | |
| 14 | Zugriffssteuerung | 51 | Angreifer |
| 15 | Speichermittel | 52 | Schlüssel |
| | | 53 | Tür |
| 16 | Kommunikationsverbindung | 54 | Schlüssel |
| 17 | Zugriffssteuerung | 55 | Türen |
| 18 | Speichermittel | | |
| 19 | Schlüsselgenerierungsmodul | 56 | Schlüssel |
| 20 | Kommunikationsanschluss | 57 | Tür |
| | | 58 | Schlüssel |
| 21 | Kommunikationsverbindung | 59 | Dateneinheiten |
| 22 | Kommunikationsverbindung | 60 | Erste Sicherheitszone |
| 23 | Verschlüsselungsmodul | | |
| 24 | Zweiter elektronischer Schlüssel | 61 | Zweite Sicherheitszone |
| 25 | Schlüssel | 62 | Kontrollmodul |
| | | | |
| 26 | Zuordnungstabelle | | |
| 27 | Ausfiihrungsanweisung | | |
| 28 | Benutzer, Datenverarbeitungseinrichtung | | |
| 29 | Datenabfragevorgang | | |
| 30 | Ablaufsteuerung | | |
| | | | |
| 31 | Aufbereiten der Anfrage | | |
| 32 | Speichereinheit | | |
| 33 | Zuordnungstabelle | | |
| 34 | Schlüssel auslesen | | |
| 35 | Aufbereitung | | |
| | | | |
| 36 | Authentifizierungseinrichtung | | |
| 37 | Authentizität prüfen | | |

## Patentansprüche

1. Verteilte Datenspeicherungseinrichtung (1), umfassend
- eine Mehrzahl von Speichereinheiten (2) mit jeweils einem Speichermittel (15)' und einer Zugriffssteuerung (14), wobei die Zugriffsteuerung (14) derart ausgebildet ist, dass eine über eine Kommunikationsverbindung (16) eintreffende Anfrage keinen direkten Zugriff auf das Speichermittel (15) erlangt,
- eine Authentifizierungseinrichtung (9) mit einem Schlüsselspeicher (11) und einer Validierungseinrichtung (47), wobei im Schlüsselspeicher (11) der Authentifizierungseinrichtung (9) zumindest ein elektronischer Referenzschlüssel (12) hinterlegt ist,
- eine Ablaufsteuerung (4) mit einem Ablaufsteuerungsmodul (13) und einer Zugriffskontrolleinrichung (6), wobei
- die Ablaufsteuerung (4),
- dazu ausgebildet ist, eine Anfrage eines Datenendgerätes (5) abzuarbeiten und aus den Speichereinheiten (2) die entsprechenden Informationen abzurufen und an das Datenendgerät (5) zu übermitteln,
- mit den Speichereinheiten (2) und der Authentifizierungseinrichtung (9) kommunikativ verbunden ist, und wobei
- die Zugriffskontrolleinrichtung (6) ein Zugriffsteuerungsmodul (7) und eine eigene Speichereinheit (8) aufweist, **dadurch gekennzeichnet, dass**
- in den Speichereinheiten (2) zumindest ein erster eindeutiger elektronischer Schlüssel (10) für jede Speichereinheit (2) hinterlegt ist, der mit dem in dem Schlüsselspeicher (11) hinterlegten elektronischen Referenzschlüssel (12) der Authentifizierungseinrichtung (9) korrespondiert, wobei die Speichereinheiten (2)
- verteilt angeordnet sind,
- so ausgebildet sind, dass in den Speichereinheiten (2) keine Beziehungen zwischen Dateneinheiten (50) hinterlegt sind und
- bei Zugriff auf einer Speichereinheit (2) von der Ablaufsteuerung (4) der erste eindeutige elektronische Schlüssel (10) der Speichereinheit (2) ausgelesen und von der Authentifizierungseinrichtung (9) zur Authentifizierung geprüft wird,
- im Speichermittel (18) der Speichereinheit (8) der Zugriffskontrolleinrichtung (6) eine Zuordnungstabelle (26) und Ausführungsanweisungen (27) hinterlegt sind, wobei die Zuordnungstabelle (26) eine Beziehung zwischen den einzelnen Speichereinheiten (8) der Zugriffskontrolleinrichtung (6) herstellt,
wobei die Zugriffskontrolleinrichtung (6) eine weitere Speichereinheit (49) aufweist, in deren Speichermittel (18) Ausführungsanweisungen (27) hinterlegt sind und dass sowohl die Speichereinheit (2) der Dateneinheiten, als auch die Speichereinheit (8) der Zuordnungstabelle (26) und die Speichereinheit (49) der Ausführungsanweisen (27) gegenüber der Authentifizierungseinrichtung (9) korrekt identifiziert sein müssen, um einen Zugriff freizugeben.

2. Verteilte Datenspeicherungseinrichtung nach Anspruch 1, **dadurch gekennzeichnet, dass** die Zugriffsteuerung (14) der Speichereinheit (2) und die Ablaufsteuerung (4) ein Verschlüsselungsmodul (23) aufweisen.

3. Verteilte Datenspeicherungseinrichtung nach einem der Ansprüche 1 bis 2, **dadurch gekennzeichnet, dass** in der Speichereinheit (2) ein zweiter eindeutiger elektronischer Schlüssel (24) hinterlegt ist, der mit einem der hinterlegten Referenzschlüssel (12) der Authentifizierungseinrichtung (9) korrespondiert.

4. Verteilte Datenspeicherungseinrichtung nach einem der Ansprüche 1 bis 3, **dadurch gekennzeichnet, dass** die Authentifizierungseinrichtung (9) ein Modul (19) zur Generierung elektronischer Schlüssel (10, 12, 24, 25) aufweist.

5. Verteilte Datenspeicherungseinrichtung nach einem der Ansprüche 1 bis 4, **dadurch gekennzeichnet, dass** im Speichermittel (18) der Speichereinheit (8) der Zugriffskontrolleinrichtung (6) ein zweiter (24) eindeutiger Schlüssel hinterlegt ist, der mit dem, in der Authentifizierungseinrichtung (9) hinterlegten Referenzschlüssel (12) korrespondiert.

6. Verteilte Datenspeicherungseinrichtung nach einem der Ansprüche 1 bis 5, **dadurch gekennzeichnet, dass** das Zugriffssteuerungsmodul (7) und die Speichereinheit (8) der Zugriffskontrolleinrichtung (6) und/oder die Speichereinheit (49) über eine zweite Kommunikationsverbindung (21) miteinander kommunikativ verbunden sind.

7. Verteilte Datenspeicherungseinrichtung nach einem der Ansprüche 1 bis 6, **dadurch gekennzeichnet, dass** im Ablaufsteuerungsmodul (13) eine Mehrzahl hierarchisch strukturierter Abläufe (48) hinterlegt ist.

8. Verteilte Datenspeicherungseinrichtung nach einem der Ansprüche 1 bis 7, **dadurch gekennzeichnet, dass** in der Zuordnungstabelle (26) eine Verknüpfung eines hierarchischen Ablaufs (48) mit einer Speichereinheit (2) hinterlegt ist.

9. Verteilte Datenspeicherungseinrichtung nach einem der Ansprüche 1 bis 8, dadurch gekenntzeichnet, dass die Authentifizierungseinrichtung (9), die Ablaufsteuerung (4) und die Speichereinheit (2) eine erste Sicherheitszone (60) ausbilden.

10. Verteilte Datenspeicherungseinrichtung nach einem der Ansprüche 1 bis 9, **dadurch gekennzeichnet, dass** die Ablaufsteuerung (4), die Zuordnungstabelle (26) und die Ausführungsanweisungen (27) eine zweite Sicherheitszone (61) ausbilden.

11. Verfahren zur sicheren Speicherung von Daten in einer verteilten Datenspeicherungseinrichtung, umfassend die Bereitstellung
- einer Mehrzahl von Speichereinheiten (2) mit jeweils einem Speichermittel (15) und einer Zugriffssteuerung (14), wobei die Zugriffsteuerung (14) derart ausgebildet wird, dass eine über eine Kommunikationsverbindung (16) eintreffende Anfrage keinen direkten Zugriff auf das Speichermittel (15) erlangt,
- einer Authentifizierungseinrichtung (9) mit einem Schlüsselspeicher (11) und einer Validierungseinrichtung (47), wobei im Schlüsselspeicher (11) der Authentifizierungseinrichtung (9) zumindest ein elektronischer Referenzschlüssel (12) hinterlegt wird,
- einer Ablaufsteuerung (4) mit einem Ablaufsteuerungsmodul (13) und einer Zugriffskontrotteinrichung (6), wobei
- die Ablaufsteuerung (4),
- eine Anfrage eines Datenendgerätes (5) abarbeitet und aus den Speichereinheiten (2) die entsprechenden Informationen abruft und an das Datenendgerät (5) übermittelt,
- mit den Speichereinheiten (2) und der Authentifizierungseinrichtung (9) kommunikativ verbunden ist, und wobei
- die Zugriffskontrolleinrichtung (6) ein Zugriffsteuerungsmodul (7) und eine eigene Speichereinheit (8) aufweist, **dadurch gekennzeichnet, dass**
- in den Speichereinheiten (2) zumindest ein erster eindeutiger elektronischer Schlüssel (10) für jede Speichereinheit (2) hinterlegt ist, der mit dem in dem Schlüsselspeicher (11) hinterlegten elektronischen Referenzschlüssel (12) der Authentifizierungseinrichtung (9) korrespondiert, wobei die Speichereinheiten (2)
- verteilt angeordnet werden,
- in den Speichereinheiten (2) keine Beziehungen zwischen Dateneinheiten (50) hinterlegt werden und
- bei Zugriff auf einer Speichereinheit (2) von der Ablaufsteuerung (4) der erste eindeutige elektronische Schlüssel (10) der Speichereinheit (2) ausgelesen und von der Authentifizierungseinrichtung (9) zur Authentifizierung geprüft wird,
- im Speichermittel (18) der Speichereinheit (8) der Zugriffskontrolleinrichtung (6) eine Zuordnungstabelle (26) und Ausführungsanweisungen (27) hinterlegt werden, wobei die Zuordnungstabelle (26) eine Beziehung zwischen den einzelnen Speichereinheiten (8) der Zugriffskontrolleinrichtung (6) herstellt,
wobei die Zugriffskontrolleinrichtung (6) eine weitere Speichereinheit (49) aufweist, in deren Speichermittel (18) Ausführungsanweisungen (27) hinterlegt werden und dass sowohl die Speichereinheit (2) der Dateneinheiten, als auch die Speichereinheit (8) der Zuordnungstabelle (26) und die Speichereinheit (49) der Ausführungsanweisungen (27) gegenüber der Authentifizierungseinrichtung (9) korrekt identifiziert werden müssen, um einen Zugriff freizugeben.

12. Verfahren nach Anspruch 11, **dadurch gekennzeichnet, dass** bei fehlerhafter Authentifizierung, insbesondere aufgrund eines ungültigen Schlüssels, eine Alarmmeldung ausgegeben wird.

13. Verfahren nach einem der Ansprüche 11 bis 12, **dadurch gekennzeichnet, dass** eine Zugriffssteuerung (14, 17) der Speichereinheiten (2, 8, 49), bei einer Anfrage der Ablaufsteuerung (4), einen hinterlegten zweiten elektronischen Schlüssel (24) mit einem Schlüssel (25) der Ablaufsteuerung vergleicht.

14. Verfahren nach einem der Ansprüche 11 bis 13, **dadurch gekennzeichnet, dass** eine Zugriffssteuerung (14, 17) der Speichereinheiten (2, 8, 49), bei einer Anfrage der Ablaufsteuerung (4), einen hinterlegten zweiten elektronischen Schlüssel (24) von der Authentifizierungseinrichtung (9) prüft.

15. Verfahren nach einem der Ansprüche 11 bis 14, **dadurch gekennzeichnet, dass** die Zugriffssteuerung (14) mittels einer übermittelten Ausführungsanweisung auf die Dateneinheiten (50) zugreift.

## Claims

1. Distributed data storage device (1) comprising
- a plurality of storage units (2), each having a storage means (15) and an access control (14), the access control (14) being configured such that a request arriving via a communication connection (16) does not obtain direct access to the storage means (15),
- an authentication device (9) having a keystore (11) and a validation device (47), at least one electronic reference key (12) being stored in the keystore (11) of the authentication device (9),
- a sequence control (4) having a sequence control module (13) and an access monitoring device (6),
- the sequence control (4)
- being configured to process a request from a data terminal (5) and to retrieve the appropriate information from the storage units (2) and transmit said information to the data terminal (5),
- being connected for communication to the storage units (2) and to the authentication device (9), and
- the access monitoring device (6) comprising an access control module (7) and its own storage unit (8), **characterised in that**
- at least one first unique electronic key (10) for each storage unit (2) is stored in the storage units (2), which key corresponds to the electronic reference key (12) in the authentication device (9) stored in the keystore (11), the storage units (2)
- being arranged so as to be distributed,
- being configured such that no relationships between data units (50) are stored in the storage units (2) and
- when a storage unit (2) is accessed by the sequence control (4), the first unique electronic key (10) of the storage unit (2) being read out and checked by the authentication device (9) for the purpose of authentication,
- an assignment table (26) and execute statements (27) being stored in the storage means (18) of the storage unit (8) of the access monitoring device (6), the assignment table (26) producing a relationship between the individual storage units (8) of the access monitoring device (6),
the access monitoring device (6) comprising a further storage unit (49), in the storage means (18) of which execute statements (27) are stored, and **in that** the storage unit (2) of the data units and the storage unit (8) of the assignment table (26) and the storage unit (49) of the execute statements (27) must be correctly identified by the authentication device (9) in order to enable access.

2. Distributed data storage device according to claim 1, **characterised in that** the access control (14) of the storage unit (2) and the sequence control (4) comprise an encryption module (23).

3. Distributed data storage device according to either of claims 1 to 2, **characterised in that** a second unique electronic key (24) is stored in the storage unit (2), which key corresponds to one of the stored reference keys (12) in the authentication device (9).

4. Distributed data storage device according to any of claims 1 to 3, **characterised in that** the authentication device (9) comprises a module (19) for generating electronic keys (10, 12, 24, 25).

5. Distributed data storage device according to any of claims 1 to 4, **characterised in that** a second (24) unique key is stored in the storage means (18) of the storage unit (8) of the access monitoring device (6), which key corresponds to the reference key (12) stored in the authentication device (9).

6. Distributed data storage device according to any of claims 1 to 5, **characterised in that** the access control module (7) and the storage unit (8) of the access monitoring device (6) and/or the storage unit (49) are interconnected for communication via a second communication connection (21).

7. Distributed data storage device according to any of claims 1 to 6, **characterised in that** a plurality of hierarchically structured sequences (48) are stored in the sequence control module (13).

8. Distributed data storage device according to any of claims 1 to 7, **characterised in that** a link between a hierarchical sequence (48) and a storage unit (2) is stored in the assignment table (26).

9. Distributed data storage device according to any of claims 1 to 8, **characterised in that** the authentication device (9), the sequence control (4) and the storage unit (2) form a first security zone (60).

10. Distributed data storage device according to any of claims 1 to 9, **characterised in that** the sequence control (4), the assignment table (26) and the execute statements (27) form a second security zone (61).

11. Method for the secure storage of data in a distributed data storage device, comprising the provision of:
- a plurality of storage units (2), each having a storage means (15) and an access control (14), the access control (14) being configured such that a request arriving via a communication connection (16) does not obtain direct access to the storage means (15),
- an authentication device (9) having a keystore (11) and a validation device (47), at least one electronic reference key (12) being stored in the keystore (11) of the authentication device (9),
- a sequence control (4) having a sequence control module (13) and an access monitoring device (6),
- the sequence control (4)
- processing a request from a data terminal (5) and retrieving the appropriate information from the storage units (2) and transmitting said information to the data terminal (5),
- being connected for communication to the storage units (2) and to the authentication device (9),
and
- the access monitoring device (6) comprising an access control module (7) and its own storage unit (8), **characterised in that**
- at least one first unique electronic key (10) for each storage unit (2) is stored in the storage units (2), which key corresponds to the electronic reference key (12) in the authentication device (9) stored in the keystore (11), the storage units (2)
- being arranged so as to be distributed,
- no relationships between data units (50) being stored in the storage units (2) and
- when a storage unit (2) is accessed by the sequence control (4), the first unique electronic key (10) of the storage unit (2) being read out and checked by the authentication device (9) for the purpose of authentication,
- an assignment table (26) and execute statements (27) being stored in the storage means (18) of the storage unit (8) of the access monitoring device (6), the assignment table (26) producing a relationship between the individual storage units (8) of the access monitoring device (6),
the access monitoring device (6) comprising a further storage unit (49), in the storage means (18) of which execute statements (27) are stored, and **in that** the storage unit (2) of the data units and the storage unit (8) of the assignment table (26) and the storage unit (49) of the execute statements (27) must be correctly identified by the authentication device (9) in order to enable access.

12. Method according to claim 11, **characterised in that** if the authentication fails, in particular on account of an invalid key, an alarm message is sent.

13. Method according to either of claims 11 to 12, **characterised in that** in the event of a request from the sequence control (4), an access control (14, 17) of the storage units (2, 8, 49) compares a stored second electronic key (24) with a key (25) of the sequence control.

14. Method according to any of claims 11 to 13, **characterised in that**, in the event of a request from the sequence control (4), an access control (14, 17) of the storage units (2, 8, 49) checks a stored second electronic key (24) of the authentication device (9).

15. Method according to any of claims 11 to 14, **characterised in that** the access control (14) accesses the data units (50) by means of a transmitted execute statement.

## Revendications

1. Dispositif de stockage de données réparti (1), comprenant
- une pluralité d'unités de stockage (2) avec chaque fois un moyen de stockage (15) et une commande d'accès (14), la commande d'accès (14) étant conçue de telle sorte qu'une demande arrivant par une liaison de communication (16) n'obtient pas un accès direct au moyen de stockage (15),
- un dispositif d'authentification (9) avec une mémoire de clés (11) et un dispositif de validation (47), au moins une clé électronique de référence (12) étant enregistrée dans la mémoire de clés (11) du dispositif d'authentification (9),
- une commande séquentielle (4) avec un module de commande séquentielle (13) et un dispositif de contrôle d'accès (6),
- la commande séquentielle (4)
- étant conçue pour traiter une demande d'un terminal de données (5) et pour appeler les informations correspondantes dans les unités de stockage (2) et les transmettre au terminal de données (5),
- étant en liaison de communication avec les unités de stockage (2) et le dispositif d'authentification (9), et dans lequel
- le dispositif de contrôle d'accès (6) présentant un module de commande d'accès (7) et une propre unité de stockage (8),
**caractérisé en ce que**
- au moins une première clé électronique univoque (10) est enregistrée dans les unités de stockage (2) pour chaque unité de stockage (2), laquelle correspond à la clé électronique de référence (12) du dispositif d'authentication (9) enregistrée dans la mémoire de clés (11), les unités de stockage (2)
- étant disposées de manière répartie,
- étant conçues de telle sorte qu'aucune relation entre des unités de données (50) ne soit enregistrée dans les unités de stockage (2) et
- en cas d'accès à une unité de stockage (2) par la commande séquentielle (4), la première clé électronique univoque (10) de l'unité de stockage (2) est lue et contrôlée pour authentification par le dispositif d'authentification (9),
- une table de correspondance (26) et des instructions d'exécution (27) sont enregistrées dans le moyen de stockage (18) de l'unité de stockage (8) du dispositif de contrôle d'accès (6), la table de correspondance (26) établissant une relation entre les différentes unités de stockage (8) du dispositif de contrôle d'accès (6),
dans lequel le dispositif de contrôle d'accès (6) présente une autre unité de stockage (49) dans les moyens de stockage (18) de laquelle sont enregistrées des instructions d'exécution (27) et qu'aussi bien l'unité de stockage (2) des unités de données que l'unité de stockage (8) de la table de correspondance (26) et l'unité de stockage (49) des instructions d'exécution (27) doivent être correctement identifiées par rapport au dispositif d'authentification (9) pour qu'un accès soit autorisé.

2. Dispositif de stockage de données réparti selon la revendication 1, **caractérisé en ce que** la commande d'accès (14) de l'unité de stockage (2) et la commande séquentielle (4) présentent un module de cryptage (23).

3. Dispositif de stockage de données réparti selon l'une des revendications 1 à 2, **caractérisé en ce qu'**une deuxième clé électronique univoque (24) est enregistrée dans l'unité de stockage (2), laquelle correspond à une des clés de référence (12) enregistrées du dispositif d'authentification (9).

4. Dispositif de stockage de données réparti selon l'une des revendications 1 à 3, **caractérisé en ce que** le dispositif d'authentification (9) présente un module (19) de génération de clés électroniques (10, 12, 24, 25).

5. Dispositif de stockage de données réparti selon l'une des revendications 1 à 4, **caractérisé en ce qu'**une deuxième (24) clé univoque est enregistrée dans le moyen de stockage (18) de l'unité de stockage (8) du dispositif de contrôle d'accès (6), laquelle correspond à la clé de référence (12) enregistrée dans le dispositif d'authentification (9).

6. Dispositif de stockage de données réparti selon l'une des revendications 1 à 5, **caractérisé en ce que** le module de commande d'accès (7) et l'unité de stockage (8) du dispositif de contrôle d'accès (6) et/ou l'unité de stockage (49) sont reliés entre eux par une deuxième liaison de communication (21).

7. Dispositif de stockage de données réparti selon l'une des revendications 1 à 6, **caractérisé en ce qu'**une pluralité de séquences (48) structurées hiérarchiquement sont enregistrées dans le module de commande séquentielle (13).

8. Dispositif de stockage de données réparti selon l'une des revendications 1 à 7, **caractérisé en ce qu'**une association d'une séquence hiérarchique (48) à une unité de stockage (2) est enregistrée dans la table de correspondance (26).

9. Dispositif de stockage de données réparti selon l'une des revendications 1 à 8, **caractérisé en ce que** le dispositif d'authentification (9), la commande séquentielle (4) et l'unité de stockage (2) forment une première zone de sécurité (60).

10. Dispositif de stockage de données réparti selon l'une des revendications 1 à 9, **caractérisé en ce que** la commande séquentielle (4), la table de correspondance (26) et les instructions d'exécution (27) forment une deuxième zone de sécurité (61).

11. Procédé de stockage sûr de données dans un dispositif de stockage de données réparti, comprenant la mise à disposition
- d'une pluralité d'unités de stockage (2) avec chaque fois un moyen de stockage (15) et une commande d'accès (14), la commande d'accès (14) étant conçue de telle sorte qu'une demande arrivant par une liaison de communication (16) n'obtient pas un accès direct au moyen de stockage (15),
- d'un dispositif d'authentification (9) avec une mémoire de clés (11) et un dispositif de validation (47), au moins une clé électronique de référence (12) étant enregistrée dans la mémoire de clés (11) du dispositif d'authentification (9),
- d'une commande séquentielle (4) avec un module de commande séquentielle (13) et un dispositif de contrôle d'accès (6),
- la commande séquentielle (4)
- traitant une demande d'un terminal de données (5) et appelant les informations correspondantes dans les unités de stockage (2) et les transmettant au terminal de données (5),
- étant en liaison de communication avec les unités de stockage (2) et le dispositif d'authentification (9), et dans lequel
- le dispositif de contrôle d'accès (6) présente un module de commande d'accès (7) et une propre unité de stockage (8),
**caractérisé en ce que**
- au moins une première clé électronique univoque (10) est enregistrée dans les unités de stockage (2) pour chaque unité de stockage (2), laquelle correspond à la clé électronique de référence (12) du dispositif d'authentification (9) enregistrée dans la mémoire de clés (11), les unités de stockage (2)
- étant disposées de manière répartie,
- étant telles qu'aucune relation entre des unités de données (50) n'est enregistrée dans les unités de stockage (2) et
- en cas d'accès à une unité de stockage (2) par la commande séquentielle (4), la première clé électronique univoque (10) de l'unité de stockage (2) est lue et contrôlée pour authentification par le dispositif d'authentification (9),
- une table de correspondance (26) et des instructions d'exécution (27) sont enregistrées dans le moyen de stockage (18) de l'unité de stockage (8) du dispositif de contrôle d'accès (6), la table de correspondance (26) établissant une relation entre les différentes unités de stockage (8) du dispositif de contrôle d'accès (6),
dans lequel le dispositif de contrôle d'accès (6) présente une autre unité de stockage (49) dans les moyens de stockage (18) de laquelle sont enregistrées des instructions d'exécution (27) et qu'aussi bien l'unité de stockage (2) des unités de données que l'unité de stockage (8) de la table de correspondance (26) et l'unité de stockage (49) des instructions d'exécution (27) doivent être correctement identifiées par rapport au dispositif d'authentification (9) pour qu'un accès soit autorisé.

12. Procédé selon la revendication 11, **caractérisé en ce qu'**un message d'alerte est émis en cas d'authentification incorrecte, en particulier en raison d'une clé invalide.

13. Procédé selon l'une des revendications 11 à 12, **caractérisé en ce qu'**une commande d'accès (14, 17) des unités de stockage (2, 8, 49) compare, lors d'une demande de la commande séquentielle (4), une deuxième clé électronique (24) enregistrée avec une clé (25) de la commande séquentielle.

14. Procédé selon l'une des revendications 11 à 13, **caractérisé en ce qu'**une commande d'accès (14, 17) des unités de stockage (2, 8, 49) contrôle, lors d'une demande de la commande séquentielle (4), une deuxième clé électronique (24) enregistrée du dispositif d'authentification (9).

15. Procédé selon l'une des revendications 11 à 14, **caractérisé en ce que** la commande d'accès (14) accède aux unités de données (50) au moyen d'une instruction d'exécution transmise.
